(19) Europäisches Patentamt
European Patent Office
Office européen des brevets

(11) EP 4 576 787 A1

(12) EUROPEAN PATENT APPLICATION
published in accordance with Art. 153(4) EPC

(43) Date of publication:
25.06.2025 Bulletin 2025/26

(51) International Patent Classification (IPC):
H04N 21/2347 (2011.01)

(21) Application number: 23890042.7

(52) Cooperative Patent Classification (CPC):
H04N 21/2347

(22) Date of filing: 29.03.2023

(86) International application number:
PCT/CN2023/084909

(87) International publication number:
WO 2024/103597 (23.05.2024 Gazette 2024/21)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 14.11.2022 PCT/CN2022/131787

(71) Applicant: Huawei Technologies Co., Ltd.
Shenzhen, Guangdong 518129 (CN)

(72) Inventors:
• LIANG, Zhijian
  Shenzhen, Guangdong 518129 (CN)
• WANG, Guangqiang
  Shenzhen, Guangdong 518129 (CN)

(74) Representative: MERH-IP Matias Erny Reichl
Hoffmann
Patentanwälte PartG mbB
Paul-Heyse-Straße 29
80336 München (DE)

(54) **VIDEO-AUDIO STREAM TRANSMISSION METHOD, APPARATUS AND SYSTEM**

(57) Embodiments of this application relate to the field of media technologies, and provide an audio/video stream transmission method and system, and an apparatus, to improve security of audio/video stream transmission. The method includes: A transmit end generates a first content key, where the first content key is used to encrypt an audio/video stream in a unicast scenario; and the transmit end generates a first encryption description packet, where the first encryption description packet includes at least one of the following: an identifier of the first content key, an identifier of the transmit end, an encryption algorithm and mode, and first counter information, and the first counter information is high 64 bits of a first counter. Then, the transmit end encrypts a first audio/video packet of a first audio/video stream based on the encryption algorithm and mode by using the first content key and the first counter to obtain a first encrypted audio/video packet, and sends a first encrypted audio/video stream including the first encrypted audio/video packet and the first encryption description packet to a first receive end.

Transmit end — First receive end

S401: The transmit end generates a first content key

S402: The transmit end generates a first encryption description packet, where the first encryption description packet includes an encryption algorithm and mode, and/or first counter information

S403: The transmit end encrypts a first audio/video packet from a first audio/video stream based on the encryption algorithm and mode by using the first content key and a first counter to obtain a first encrypted audio/video packet

S404: The transmit end sends a first encrypted audio/video stream including the first encrypted audio/video packet and the first encryption description packet to the first receive end

S405: The first receive end parses the first encrypted audio/video stream to obtain the first encrypted audio/video packet and the first encryption description packet

S406: The first receive end generates the first content key based on the first encryption description packet

S407: The first receive end decrypts the first encrypted audio/video packet based on the encryption algorithm and mode by using the first content key and the first counter to obtain the first audio/video packet

FIG. 4

## Description

This application claims priority to Chinese Patent Application No. PCT/CN2022/131787, filed with the China National Intellectual Property Administration on November 14, 2022 and entitled "AUDIO/VIDEO STREAM TRANSMISSION METHOD AND SYSTEM, AND APPARATUS", which is incorporated herein by reference in its entirety.

## TECHNICAL FIELD

Embodiments of this application relate to the field of media technologies, and in particular, to an audio/video stream transmission method and system, and an apparatus.

## BACKGROUND

With development of technologies, an audio/video is increasingly popular, and transmission of an audio/video stream is performed more frequently. During transmission of the audio/video stream, an audio/video content manufacturer, an audio/video service provider, a broadcast and television operator, an IPTV operator, a terminal vendor, and the like all have high requirements on transmission security.

Currently, a high-bandwidth data content protection (high-bandwidth digital content protection, HDCP) standard is used for audio/video stream transmission. According to the HDCP standard, a transmit end sends an encrypted audio/video stream to an intermediate downstream device (for example, an HDCP repeater). After the intermediate downstream device decrypts the audio/video stream, the intermediate downstream device encrypts the audio/video stream again, and then sends an encrypted audio/video stream to a receive end.

In the foregoing audio/video stream transmission method, because the intermediate downstream device needs to encrypt and decrypt the audio/video stream, an attack on the audio/video stream may occur on the intermediate downstream device, resulting in a security risk to transmission of the audio/video stream.

## SUMMARY

Embodiments of this application provide an audio/video stream transmission method and system, and an apparatus, to improve security of audio/video stream transmission.

To achieve the foregoing objectives, the following technical solutions are used in embodiments of this application.

According to a first aspect, an embodiment of this application provides an audio/video stream transmission method, applied to a transmit end. The method includes: generating a first content key, where the first content key is used to encrypt an audio/video stream in a unicast scenario; generating a first encryption description packet, where the first encryption description packet includes an encryption algorithm and mode, and/or first counter information, where the first counter information is high 64 bits of a first counter; further encrypting a first audio/video packet based on the encryption algorithm and mode by using the first content key and the first counter to obtain a first encrypted audio/video packet, where the first audio/video packet is a packet of a first audio/video stream; and sending a first encrypted audio/video stream including the first encrypted audio/video packet and the first encryption description packet to a first receive end.

In the audio/video stream transmission method provided in this embodiment of this application, after the transmit end sends an encrypted audio/video stream, another device (for example, a routing device) between the transmit end and a receive end does not decrypt and then encrypt the encrypted audio/video stream. Compared with a conventional technology, in this method, a possibility of attacking the audio/video stream in an intermediate downstream device can be eliminated. Therefore, security of audio/video stream transmission can be improved.

Further, in this embodiment of this application, a content key can be generated for a specific audio/video stream, and different content keys may be used to encrypt different audio/video streams, to implement stream-based encryption and decryption. Compared with an existing end-to-end encryption and decryption mechanism, this further improves security of audio/video stream transmission.

In a possible implementation, the first encryption description packet further includes an identifier of the first content key and/or an identifier of the transmit end; and the generating a first content key includes: deriving the first content key based on a shared master key between the transmit end and the first receive end, the identifier of the first content key, a random number generated by the transmit end, a random number generated by the first receive end, the identifier of the transmit end, and an identifier of the first receive end.

A derivation formula of the first content key is specifically as follows:

$$CK1 = KDF(K_m, \text{Random\_A} \| \text{ID\_A} \| \text{ID\_B} \| CKId, \text{"Unicast Content Key"}, 128)$$

CK1 represents the first content key, $K_m$ is the shared master key, Random_A is the random number generated by the transmit end (that is, the first random number), Random_B is the random number generated by the receive end (that is, the second random number), ID_A is the identifier of the transmit end, ID_B is the identifier of the receive end (the transmit end obtains the identifier from a certificate of the receive end), CKId is the identifier of the first content key (the transmit end may randomly generate a unique identifier as the identifier of the first content key), and 128 indicates that the first content key is 128 bits. The KDF algorithm is a KDF-SM3 algorithm.

In a possible implementation, the sending the first encrypted audio/video packet and the first encryption description packet to a first receive end includes: carrying the first encryption description packet in a vertical blanking region of the first encrypted audio/video packet to obtain the first encrypted audio/video stream, and sending the first encrypted audio/video stream to the first receive end.

It may be understood that, a video frame of the audio/video stream is used as an example, and the video frame includes a vertical blanking region, a horizontal blanking region, and a valid video region. There is a vertical blanking region packet header flag in a vertical blanking region of each video frame, to indicate start of the vertical blanking region. There is a horizontal blanking region packet header flag in the horizontal blanking region of the video frame, to indicate start of the horizontal blanking region.

The first encryption description packet may be transmitted in the vertical blanking region, and the first encryption description packet may be located after a vertical blanking region packet header and is completely transmitted before a first horizontal blanking region packet header, to implement frame-level content protection control of an audio/video stream packet.

A transmit adapter of the transmit end may pack valid video data of the video frame into a valid video packet, and transmit the valid video packet in the valid video region. Optionally, a content protection flag bit may be added to an encrypted valid video packet, and is set to 1, and a content protection flag bit of an unencrypted valid video packet may be set to 0.

Audio data of the audio/video stream and configuration data related to an audio/video service may be packed into an audio data packet, and transmitted in a blanking region (the vertical blanking region and/or the horizontal blanking region). Optionally, a content protection flag bit may be added to an encrypted audio packet, and is set to 1, and a content protection flag bit of an unencrypted audio packet may be set to 0.

In a possible implementation, before the generating a first content key, the audio/video stream transmission method provided in this embodiment of this application further includes: initiating an authentication and key agreement procedure to the first receive end to obtain the shared master key and the random number generated by the first receive end.

In a possible implementation, before the encrypting a first audio/video stream by using the first content key to obtain a first encrypted audio/video stream, the audio/video stream transmission method provided in this embodiment of this application further includes: authorizing the first receive end according to an authorization control strategy of the first audio/video stream.

In this embodiment of this application, that the transmit end authorizes the receive end specifically includes: The transmit end verifies a protocol version, a security level, and a quantity of receive ends of the receive end according to the authorization control strategy, and the transmit end successfully authorizes the receive end when the following condition 1 to condition 3 are met.

Condition 1: A protocol version number in the authorization control strategy is greater than or equal to a protocol version number negotiated by the two ends in an authentication process.

Condition 2: A security level in the authorization control strategy is less than or equal to a security level of the receive end.

Condition 3: An upper limit value of a quantity of receivers in the authorization control strategy is less than or equal to a current quantity of existing receive ends.

In a possible implementation, the audio/video stream transmission method provided in this embodiment of this application further includes: randomly generating a second content key, where the second content key is used to encrypt an audio/video stream in a multicast scenario; generating a second encryption description packet, where the second encryption description packet includes the encryption algorithm and mode, and/or second counter information, and the second counter information is high 64 bits of a second counter; encrypting a second audio/video packet based on the encryption algorithm and mode by using the second content key and the second counter to obtain a second encrypted audio/video packet, where the second audio/video packet is a packet of the first audio/video stream; further generating a key distribution packet, where the key distribution packet includes a third counter and/or a first encrypted content key, and the first encrypted content key is a key obtained by encrypting the second content key based on the encryption algorithm and mode by using a first target key and the third counter; and separately sending a second encrypted audio/video stream including the second encrypted audio/video packet, the second encryption description packet, and the key distribution packet to the first receive end and a second receive end. This application supports switching from unicast to multicast, and implements switching of an encryption mechanism in a scenario switching process.

In a possible implementation, the first target key is generated based on the shared master key between the transmit end and the first receive end, the random number generated by the transmit end, the random number generated by the first receive end, the identifier of the transmit end, and the identifier of the first receive end; and the second target key is generated based on a shared master key between the transmit end and the second receive end, the random number generated by the transmit end, a random number generated by the second receive end, the identifier of the transmit end, and an identifier of the second receive end.

For a method for generating the first target key or the second target key, refer to the following formula:

$$CKEK = KDF(K_m, Random\_A \| Random\_B \| ID\_A \| ID\_B, \text{"Content Key Encryption Key"}, 128)$$

CKEK represents the target key, $K_m$ is the shared master key between the transmit end and the receive end, Random_A is the random number generated by the transmit end, Random_B is the random number generated by the receive end, ID_A is the identifier of the transmit end, and ID_B is the identifier of the receive end.

According to a second aspect, an embodiment of this application provides an audio/video stream transmission method, applied to a receive end. The method includes: parsing a first encrypted audio/video stream to obtain a first encrypted audio/video packet and a first encryption description packet, where the first encryption description packet includes an encryption algorithm and mode, and/or first counter information, and the first counter information is high 64 bits of a first counter; generating a first content key based on the first encryption description packet, where the first content key is used to encrypt an audio/video stream in a unicast scenario; and decrypting the first encrypted audio/video packet based on the encryption algorithm and mode by using the first content key and the first counter to obtain a first audio/video packet, where the first audio/video packet is a packet of a first audio/video stream.

In a possible implementation, the first encryption description packet further includes an identifier of the first content key and/or an identifier of a transmit end; and the generating a first content key based on the first encryption description packet includes: deriving the first content key based on a shared master key between the transmit end and the receive end, the identifier of the first content key, a random number generated by the transmit end, a random number generated by the receive end, the identifier of the transmit end, and an identifier of the receive end.

In a possible implementation, an audio/video stream transmission method provided in this embodiment of this application further includes: performing an authentication and key agreement procedure with the transmit end to obtain the shared master key, the identifier of the transmit end, and the random number generated by the transmit end. Specifically, the transmit end performs authentication and key agreement with the first receive end to obtain a first shared master key, and the transmit end performs authentication and key agreement with a second receive end to obtain a second shared master key.

In a possible implementation, the audio/video stream transmission method provided in this embodiment of this application further includes: The first receive end parses a second encrypted audio/video stream to obtain a second encrypted audio/video packet, a second encryption description packet, and a first key distribution packet, where the second encryption description packet includes the encryption algorithm and mode, and/or second counter information, the second counter information is high 64 bits of a second counter, the first key distribution packet includes a third counter and/or a first encrypted content key, and the first encrypted content key is a key obtained by encrypting a second content key based on the encryption algorithm and mode by using a first target key and the third counter; decrypting the first encrypted content key based on the encryption algorithm and mode by using the first target key and the third counter in the first key distribution packet to obtain the second content key, where the second content key is used to encrypt an audio/video stream in a multicast scenario; and decrypting the second encrypted audio/video packet based on the encryption algorithm and mode by using the second content key and the second counter to obtain a second audio/video packet, where the second audio/video packet is a packet of the first audio/video stream.

In a possible implementation, the first target key is generated based on the first shared master key between the transmit end and the first receive end, the random number generated by the transmit end, the random number generated by the first receive end, the identifier of the transmit end, and the identifier of the first receive end. The second target key is generated based on the second shared master key between the transmit end and the second receive end, the random number generated by the transmit end, a random number generated by the second receive end, the identifier of the transmit end, and an identifier of the second receive end.

For technical effect of the second aspect and the possible implementations of the second aspect, refer to the technical effect achieved by the first aspect and the possible implementations of the first aspect. Details are not described herein again.

According to a third aspect, an embodiment of this application provides an audio/video stream transmission method, applied to a transmit end. The method includes: randomly generating a second content key, where the second content key is used to encrypt an audio/video stream in a multicast scenario; generating an encryption description packet, where the encryption description packet includes an encryption algorithm and mode, and/or second counter information, and the second counter information is high 64 bits of a second counter; encrypting a second audio/video packet based on the encryption algorithm and mode by using the second content key and the second counter to obtain a second encrypted audio/video packet; further generating a first key distribution packet and a second key distribution packet, where the first key distribution packet includes a third counter and/or a first encrypted content key, and the first encrypted content key is a key obtained by encrypting the second content key based on the encryption algorithm and mode by using a first target key and the third counter; and the second key distribution packet includes a fourth counter and/or a second encrypted content key, and the second encrypted content key is a key obtained by encrypting the second content key based on the encryption algorithm and mode by using a second target key and the fourth counter; and separately sending a second encrypted audio/video packet including the second encrypted audio/video packet, the encryption description packet, the first key distribution packet, and the second key distribution packet to a first receive end and a second receive end.

In the audio/video stream transmission method provided in this embodiment of this application, after the transmit end sends an encrypted audio/video stream, another device (for example, a routing device) between the transmit end and a receive end does not decrypt and then encrypt the encrypted audio/video stream. Compared with a conventional technology, in this method, a possibility of attacking the audio/video stream in an intermediate downstream device can be eliminated. Therefore, security of audio/video stream transmission can be improved.

Further, in this embodiment of this application, a content key can be generated for a specific audio/video stream, and different content keys may be used to encrypt different audio/video streams, to implement stream-based encryption and decryption. Compared with an existing end-to-end encryption and decryption mechanism, this further improves security of audio/video stream transmission.

In a possible implementation, the separately sending the second encrypted audio/video packet, the encryption description packet, the first key distribution packet, and the second key distribution packet to a first receive end and a second transmit end includes: carrying the encryption description packet, the first key distribution packet, and the second key distribution packet in a vertical blanking region of the second encrypted audio/video packet to obtain the second encrypted audio/video stream, and sending the second encrypted audio/video stream to the first receive end and the second receive end.

In a possible implementation, before the randomly generating a second content key, the audio/video stream transmission method provided in this embodiment of this application further includes: initiating an authentication and key agreement procedure to the first receive end to obtain a first shared master key, an identifier of the first receive end, and a random number generated by the first receive end; and initiating an authentication and key agreement procedure to the second receive end to obtain a second shared master key, an identifier of the second receive end, and a random number generated by the second receive end.

In a possible implementation, the audio/video stream transmission method provided in this embodiment of this application further includes: authorizing the first receive end and the second receive end according to an authorization control strategy of the second audio/video stream.

In a possible implementation, the first target key is generated based on the first shared master key, a random number generated by the transmit end, the random number generated by the first receive end, an identifier of the transmit end, and an identifier of the first receive end; and the second target key is generated based on the second shared master key, the random number generated by the transmit end, the random number generated by the second receive end, the identifier of the transmit end, and an identifier of the second receive end.

According to a fourth aspect, an embodiment of this application provides an audio/video stream transmission method, applied to a receive end. The method includes: parsing a second encrypted audio/video stream to obtain a second encrypted audio/video packet, an encryption description packet, and a first key distribution packet, where the encryption description packet includes an encryption algorithm and mode, and/or second counter information, the second counter information is high 64 bits of a second counter, the first key distribution packet includes a third counter and/or a first encrypted content key, and the first encrypted content key is a key obtained by encrypting a second content key based on the encryption algorithm and mode by using a first target key and the third counter; decrypting the first encrypted content key based on the encryption algorithm and mode by using the first target key and the third counter in the first key distribution packet to obtain the second content key, where the second content key is used to encrypt an audio/video stream in a multicast scenario; and decrypting the second encrypted audio/video packet based on the encryption algorithm and mode by using the second content key and the second counter to obtain a second audio/video packet. A second receive end obtains a second encrypted audio/video packet, an encryption description packet, and a second key distribution packet, where the second key distribution packet includes a fourth counter and/or a second encrypted content key, and the second encrypted content key is a key obtained by encrypting a second content key based on the encryption algorithm and mode by using a second target key and the fourth counter; decrypting the second encrypted content key based on the encryption algorithm and mode by using the second target key and the fourth counter in the second key distribution packet to obtain the second content key, where the second content key is used to encrypt an audio/video stream in a multicast scenario; and decrypting the second encrypted audio/video packet based on the encryption algorithm and mode by using the second content key and the second counter to obtain a second audio/video packet.

In a possible implementation, the audio/video stream transmission method provided in this embodiment of this application further includes: A first receive end performs an authentication and key agreement procedure with a transmit end, to obtain a first shared master key between the transmit end and the receive end, an identifier of the first receive end, and a random number generated by the first receive end.

In a possible implementation, the target key is generated based on the shared master key, a random number generated by the transmit end, the random number generated by the receive end, an identifier of the transmit end, and the identifier of the receive end.

For technical effect of the third aspect, the fourth aspect, and the possible implementations of the third aspect and the fourth aspect, refer to the technical effect achieved in the first aspect and the possible implementations of the first aspect. Details are not described herein again.

According to a fifth aspect, an embodiment of this application provides a transmit end, including a key management module, an encryption module, and a sending module. The key management module is configured to: generate a first content key, where the first content key is used to encrypt an audio/video stream in a unicast scenario; and generate a first encryption description packet, where the first encryption description packet includes an encryption algorithm and mode, and/or first counter information, and the first counter information is high 64 bits of a first counter. The encryption module is configured to encrypt a first audio/video packet based on the encryption algorithm and mode by using the first content key and the first counter to obtain a first encrypted audio/video packet, where the first audio/video packet is a packet of a first audio/video stream. The sending module is configured to send a first encrypted audio/video stream including the first encrypted audio/video packet and the first encryption description packet to a first receive end.

In a possible implementation, the first encryption description packet further includes an identifier of the first content key and/or an identifier of the transmit end. The key management module is specifically configured to derive the first content key based on a shared master key between the transmit end and the first receive end, the identifier of the first content key, a random number generated by the transmit end, a random number generated by the first receive end, the identifier of the transmit end, and an identifier of the first receive end.

In a possible implementation, the sending module is specifically configured to: include the first encryption description packet in a vertical blanking region of the first encrypted audio/video packet to obtain the first encrypted audio/video stream, and send the first encrypted audio/video stream to the first receive end.

In a possible implementation, the transmit end provided in this embodiment of this application further includes an authentication module. The authentication module is configured to initiate an authentication and key agreement procedure to the first receive end to obtain the shared master key and the random number generated by the first receive end.

In a possible implementation, the transmit end provided in this embodiment of this application further includes an authorization module. The authorization module is configured to authorize the first receive end according to an authorization control strategy of the first audio/video stream.

In a possible implementation, the key management module is further configured to: randomly generate a second content key, where the second content key is used to encrypt an audio/video stream in a multicast scenario; and generate a second encryption description packet, where the second encryption description packet includes the encryption algorithm and mode, and/or second counter information, and the second counter information is high 64 bits of a second counter. The encryption module is further configured to encrypt a second audio/video packet based on the encryption algorithm and mode by using the second content key and the second counter to obtain a second encrypted audio/video packet, where the second audio/video packet is a packet of the first audio/video stream. The key management module is further configured to generate a first key distribution packet and a second key distribution packet, where the first key distribution packet includes a third counter and/or a first encrypted content key, and the first encrypted content key is a key obtained by encrypting the second content key based on the encryption algorithm and mode by using a first target key and the third counter; and the second key distribution packet includes a fourth counter and/or a second encrypted content key, and the second encrypted content key is a key obtained by encrypting the second content key based on the encryption algorithm and mode by using a second target key and the fourth counter. The sending module is further configured to separately send a second encrypted audio/video stream including the second encrypted audio/video packet, the second encryption description packet, the first key distribution packet, and the second key distribution packet to the first receive end and a second receive end.

In a possible implementation, the first target key is generated based on the shared master key between the transmit end and the first receive end, the random number generated by the transmit end, the random number generated by the first receive end, the identifier of the transmit end, and the identifier of the first receive end; and the second target key is generated based on a shared master key between the transmit end and the second receive end, the random number generated by the transmit end, a random number generated by the second receive end, the identifier of the transmit end, and an identifier of the second receive end.

According to a sixth aspect, an embodiment of this application provides a receive end, including an obtaining module, a key management module, and a decryption module. The obtaining module is configured to parse a first encrypted audio/video stream to obtain a first encrypted audio/video packet and a first encryption description packet, where the first encryption description packet includes an encryption algorithm and mode, and/or first counter information, and the first counter information is high 64 bits of a first counter. The key management module is configured to generate a first content key based on the first encryption description packet, where the first content key is used to encrypt an audio/video stream in a unicast scenario. The decryption module is configured to decrypt the first encrypted audio/video packet based on the encryption algorithm and mode by using the first content key and the first counter to obtain a first audio/video packet, where the first audio/video packet is a packet of a first audio/video stream.

In a possible implementation, the first encryption description packet further includes an identifier of the first content key and/or an identifier of a transmit end. The key management module is specifically configured to derive the first content key based on a shared master key between the transmit end and the receive end, the identifier of the first content key, a random number generated by the transmit end, a random number generated by the first receive end, the identifier of the transmit end, and an identifier of the receive end.

In a possible implementation, the receive end provided in this embodiment of this application further includes an authentication module. The authentication module is configured to perform an authentication and key agreement procedure with the transmit end to obtain the shared master key and the random number generated by the transmit end. Specifically, the authentication module performs authentication and key agreement with the first receive end to obtain a first shared master key, and the authentication module performs authentication and key agreement with a second receive end to obtain a second shared master key.

In a possible implementation, the obtaining module of the first receive end is further configured to parse a second encrypted audio/video stream to obtain a second encrypted audio/video packet, a second encryption description packet, and a first key distribution packet, where the second encryption description packet includes the encryption algorithm and mode, and/or second counter information, the second counter information is high 64 bits of a second counter, the first key distribution packet includes a third counter and/or a first encrypted content key, and the first encrypted content key is a key obtained by encrypting the second content key based on the encryption algorithm and mode by using a first target key and the third counter. The key management module of the first receive end is further configured to decrypt the first encrypted content key based on the encryption algorithm and mode by using the first target key and the third counter in the first key distribution packet to obtain the second content key, where the second content key is used to encrypt an audio/video stream in a multicast scenario. The decryption module of the first receive end is further configured to decrypt the second encrypted audio/video packet based on the encryption algorithm and mode by using the second content key and the second counter to obtain a second audio/video packet, where the second audio/video packet is a packet of the first audio/video stream.

In a possible implementation, the first target key is generated based on the first shared master key between the transmit end and the first receive end, the random number generated by the transmit end, the random number generated by the first receive end, the identifier of the transmit end, and the identifier of the first receive end. The second target key is generated based on the second shared master key between the transmit end and the second receive end, the random number generated by the transmit end, a random number generated by the second receive end, the identifier of the transmit end, and an identifier of the second receive end.

According to a seventh aspect, an embodiment of this application provides a transmit end, including a key management module, an encryption module, and a sending module. The key management module is configured to randomly generate a second content key, where the second content key is used to encrypt an audio/video stream in a multicast scenario; and generate an encryption description packet, where the encryption description packet includes an encryption algorithm and mode, and/or second counter information, and the second counter information is high 64 bits of a second counter. The encryption module is configured to encrypt a second audio/video packet based on the encryption algorithm and mode by using the second content key and the second counter to obtain a second encrypted audio/video packet. The key management module is further configured to generate a first key distribution packet and a second key distribution packet, where the first key distribution packet includes a third counter and/or a first encrypted content key, and the first encrypted content key is a key obtained by encrypting the second content key based on the encryption algorithm and mode by using a first target key and the third counter; and the second key distribution packet includes a fourth counter and/or a second encrypted content key, and the second encrypted content key is a key obtained by encrypting the second content key based on the encryption algorithm and mode by using a second target key and the fourth counter. The sending module is configured to separately send a second encrypted audio/video packet including the second encrypted audio/video packet, the encryption description packet, the first key distribution packet, and the second key distribution packet to a first receive end and a second receive end.

In a possible implementation, the sending module is specifically configured to: include the encryption description packet, the first key distribution packet, and the second key distribution packet in a vertical blanking region of the second encrypted audio/video packet to obtain the second encrypted audio/video stream, and then send the second encrypted audio/video stream to the first receive end and the second receive end.

In a possible implementation, the transmit end provided in this embodiment of this application further includes an authentication module. The authentication module is configured to initiate an authentication and key agreement procedure to the first receive end to obtain a first shared master key and a random number generated by the first receive end; and initiate an authentication and key agreement procedure to the second receive end to obtain a second shared master key and a random number generated by the second receive end.

In a possible implementation, the transmit end provided in this embodiment of this application further includes an authorization module. The authorization module is configured to authorize the first receive end and the second receive end according to an authorization control strategy of the second audio/video stream.

In a possible implementation, the first target key is generated based on the first shared master key, a random number generated by the transmit end, the random number generated by the first receive end, an identifier of the transmit end, and an identifier of the first receive end; and the second target key is generated based on the second shared master key, the random number generated by the transmit end, the random number generated by the second receive end, the identifier of the transmit end, and an identifier of the second receive end.

According to an eighth aspect, an embodiment of this application provides a first receive end, including an obtaining module, a key management module, and a decryption module. The obtaining module is configured to parse a second encrypted audio/video stream to obtain a second encrypted audio/video packet, an encryption description packet, and a key distribution packet, where the encryption description packet includes an encryption algorithm and mode, and/or second counter information, the second counter information is high 64 bits of a second counter, the first key distribution packet includes a third counter and/or a first encrypted content key, and the first encrypted content key is a key obtained by encrypting a second content key based on the encryption algorithm and mode by using a first target key and the third counter. The key management module is configured to decrypt the first encrypted content key based on the encryption algorithm and mode by using the first target key and the third counter in the first key distribution packet to obtain the second content key, where the second content key is used to encrypt an audio/video stream in a multicast scenario. The decryption module is configured to decrypt the second encrypted audio/video packet based on the encryption algorithm and mode by using the second content key and the second counter to obtain a second audio/video packet.

An embodiment of this application further provides a second receive end, including an obtaining module, a key management module, and a decryption module. The obtaining module is configured to parse a second encrypted audio/video stream, and obtain a second encrypted audio/video packet, an encryption description packet, and a second key distribution packet, where the second key distribution packet includes a fourth counter and/or a second encrypted content key, and the second encrypted content key is a key obtained by encrypting a second content key based on the encryption algorithm and mode by using a second target key and the fourth counter. The key management module is configured to decrypt the second encrypted content key based on the encryption algorithm and mode by using the second target key and the fourth counter in the second key distribution packet to obtain the second content key, where the second content key is used to encrypt an audio/video stream in a multicast scenario. The decryption module is configured to decrypt the second encrypted audio/video packet based on the encryption algorithm and mode by using the second content key and a second counter to obtain a second audio/video packet.

In a possible implementation, the receive end provided in this embodiment of this application further includes an authentication module. The authentication module is configured to perform an authentication and key agreement procedure with a transmit end, to obtain a shared master key between the transmit end and the receive end and a random number generated by the transmit end.

In a possible implementation, the target key is generated based on the shared master key, the random number generated by the transmit end, a random number generated by the receive end, an identifier of the transmit end, and an identifier of the receive end.

According to a ninth aspect, an embodiment of this application provides a transmit end, including a memory and at least one processor connected to the memory. The memory is configured to store computer program code, the computer program code includes computer instructions, and when the computer instructions are executed by the at least one processor, the transmit end is enabled to perform the method according to any one of the first aspect, the third aspect, and the possible implementations of the first aspect and the third aspect.

According to a tenth aspect, an embodiment of this application provides a computer-readable storage medium. The computer-readable storage medium stores computer instructions, and when the computer instructions are run on a computer, the method according to any one of the first aspect, the third aspect, and the possible implementations of the first aspect and the third aspect is performed.

According to an eleventh aspect, an embodiment of this application provides a computer program product. The computer program product includes computer instructions, and when the computer instructions are run on a computer, the method according to any one of the first aspect, the third aspect, and the possible implementations of the first aspect and the third aspect is performed.

According to a twelfth aspect, an embodiment of this application provides a chip, including a memory and a processor. The memory is configured to store computer instructions, and the processor is configured to invoke the computer instructions from the memory and run the computer instructions, to perform the method according to any one of the first aspect, the third aspect, and the possible implementations of the first aspect and the third aspect.

According to a thirteenth aspect, an embodiment of this application provides a receive end, including a memory and at least one processor connected to the memory. The memory is configured to store computer program code, the computer program code includes computer instructions, and when the computer instructions are executed by the at least one processor, the receive end is enabled to perform the method according to any one of the second aspect, the fourth aspect, and the possible implementations of the second aspect and the fourth aspect.

According to a fourteenth aspect, an embodiment of this application provides a computer-readable storage medium. The computer-readable storage medium stores computer instructions, and when the computer instructions are run on a computer, the method according to any one of the second aspect, the fourth aspect, and the possible implementations of the second aspect and the fourth aspect is performed.

According to a fifteenth aspect, an embodiment of this application provides a computer program product. The computer program product includes computer instructions, and when the computer instructions are run on a computer, the method according to any one of the second aspect, the fourth aspect, and the possible implementations of the second aspect and the fourth aspect is performed.

According to a sixteenth aspect, an embodiment of this application provides a chip, including a memory and a processor. The memory is configured to store computer instructions, and the processor is configured to invoke the computer instructions from the memory and run the computer instructions, to perform the method according to any one of the second aspect, the fourth aspect, and the possible implementations of the second aspect and the fourth aspect.

According to a seventeenth aspect, an embodiment of this application provides an audio/video stream transmission system, including the transmit end according to any one of the fifth aspect, the seventh aspect, the ninth aspect, and the possible implementations of the fifth aspect, the seventh aspect, and the ninth aspect, and the receive end according to any one of the sixth aspect, the eighth aspect, the thirteenth aspect, and the possible implementations of the sixth aspect, the eighth aspect, and the thirteenth aspect.

It should be understood that, for beneficial effect achieved by the technical solutions in the fifth aspect to the seventeenth aspect and the corresponding possible implementations of this application, refer to the technical effect of the first aspect and the corresponding possible implementations of the first aspect. Details are not described herein again.

**BRIEF DESCRIPTION OF DRAWINGS**

FIG. 1 is a diagram of a framework of an audio/video stream transmission system based on an HDCP standard according to an embodiment of this application;
FIG. 2 is a diagram 1 of a framework of an audio/video stream transmission system according to an embodiment of this application;
FIG. 3 is a diagram of an authentication and key agreement procedure according to an embodiment of this application;
FIG. 4 is a diagram 1 of an audio/video stream transmission method according to an embodiment of this application;
FIG. 5A and FIG. 5B are a diagram 2 of a framework of an audio/video stream transmission system according to an embodiment of this application;
FIG. 6A and FIG. 6B are a diagram 2 of an audio/video stream transmission method according to an embodiment of this application;
FIG. 7 is a diagram 3 of a framework of an audio/video stream transmission system according to an embodiment of this application;
FIG. 8A and FIG. 8B are a diagram 3 of an audio/video stream transmission method according to an embodiment of this application;
FIG. 9 is a diagram 1 of a structure of a transmit end according to an embodiment of this application;
FIG. 10 is a diagram 2 of a structure of a transmit end according to an embodiment of this application;
FIG. 11 is a diagram 1 of a structure of a receive end according to an embodiment of this application; and
FIG. 12 is a diagram 2 of a structure of a receive end according to an embodiment of this application.

**DESCRIPTION OF EMBODIMENTS**

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the terms such as "example" or "for example" is intended to present a relative concept in a specific manner.

In descriptions of embodiment of this application, unless otherwise stated, "a plurality of" means two or more. For example, a plurality of audio/video receive ends refer to two or more audio/video receive ends, and a plurality of audio/video streams refer to two or more audio/video streams.

First, some concepts related to an audio/video stream transmission method and system, and an apparatus provided in embodiments of this application are explained and described.

Unicast: An audio/video stream transmit end sends an audio/video stream to an independent audio/video stream receive end.

Multicast: An audio/video stream transmit end sends an audio/video stream to a plurality of audio/video stream receive ends.

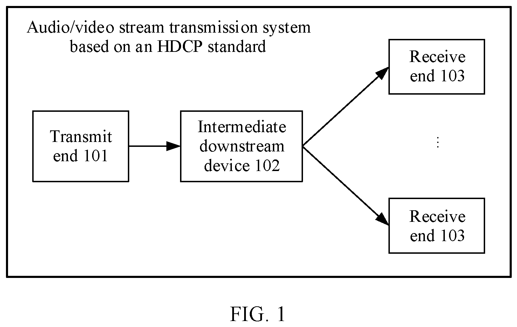

FIG. 1 is a diagram of a framework of an audio/video stream transmission system based on an HDCP standard. The transmission system includes a transmit end 101, an intermediate downstream device 102, and one or more receive ends 103. The intermediate downstream device 102 is a relay device between the transmit end 101 and the receive end 103, and the intermediate downstream device 102 participates in transmission of an audio/video stream. As shown in FIG. 1, in a process of transmitting the audio/video stream based on the HDCP standard, the transmit end 101 encrypts the audio/video stream based on a key negotiated between the transmit end 101 and the intermediate downstream device 102, and then sends an encrypted audio/video stream to the intermediate downstream device 102. The intermediate downstream device 102 decrypts the audio/video stream, and encrypts the audio/video stream based on a key negotiated between the intermediate downstream device 102 and the receive end 103. Then, the intermediate downstream device 102 sends an encrypted audio/video stream to the receive end 103, the receive end 103 decrypts the audio/video stream and displays the audio/video stream.

Because the intermediate downstream device 102 needs to decrypt and then encrypt the audio/video stream sent by the transmit end 101, during this period, the audio/video stream is vulnerable to attacks, for example, the audio/video stream is stolen or tampered with, which causes a security risk in secure transmission of the audio/video stream.

In addition, in the foregoing audio/video stream transmission method based on the HDCP standard, a mechanism for encrypting and decrypting an audio/video stream is an end-to-end encryption and decryption mechanism. With reference to FIG. 1, in the two ends, one end is the transmit end 101, and the other end is the intermediate downstream device 102, or one end is the intermediate downstream device 102, and the other end is the receive end 103. In the end-to-end encryption and decryption mechanism, keys of all audio/video streams are the same regardless of whether a single audio/video stream or a plurality of audio/video streams are transmitted between the two ends. This brings a security risk. For example, if a key of one audio/video stream is stolen, other audio/video streams are not protected.

For the problem in the background, embodiments of this application provide an audio/video stream transmission method and system, and an apparatus. In a unicast scenario, in a process of audio/video stream transmission between a transmit end and a receive end, the transmit end may generate a content key for the audio/video stream, encrypt the audio/video stream by using the content key, and generate an encryption description packet, where the encryption description packet includes an encryption algorithm and mode for the audio/video stream, and/or counter information. Then, the transmit end sends a first encrypted audio/video stream including an encrypted audio/video stream and the encryption description packet to the receive end. After receiving the first encrypted audio/video stream, the receive end parses the first encrypted audio/video stream to obtain the encrypted audio/video stream and the encryption description packet, generates the content key based on the encryption description packet, and decrypts the encrypted audio/video stream by using the content key. In the method, after the transmit end sends the encrypted audio/video stream, another device (for example, a routing device) between the transmit end and the receive end does not decrypt and then encrypt the encrypted audio/video stream. Compared with the conventional technology, the technical solutions provided in embodiments of this application eliminate a possibility of attacking the audio/video stream in the intermediate downstream device. Therefore, security of audio/video stream transmission can be improved.

In a multicast scenario, a transmit end generates a content key for an audio/video stream, uses the content key to encrypt the audio/video stream, and generates an encryption description packet and a key distribution packet, where the encryption description packet includes an encryption algorithm and mode for encrypting the audio/video stream, and/or counter information, and the key distribution packet includes an encrypted content key. Then, the transmit end sends a second encrypted audio/video stream including an encrypted audio/video stream, the encryption description packet, and the key distribution packet to a receive end. After receiving the second encrypted audio/video stream, the receive end parses the second encrypted audio/video stream to obtain the encrypted audio/video stream, the encryption description packet, and the key distribution packet, obtains the content key based on the key distribution packet, and decrypts the encrypted audio/video stream based on the content key and an encryption algorithm and/or a counter in the encryption description packet. In the method, after the transmit end sends the encrypted audio/video stream, another device (for example, a routing device) between the transmit end and the receive end does not decrypt and then encrypt the encrypted audio/video stream. Compared with the conventional technology, the technical solutions provided in embodiments of this application eliminate a possibility of attacking the audio/video stream in the intermediate downstream device. Therefore, security of audio/video stream transmission can be improved.

Further, in embodiments of this application, a content key can be generated for a specific audio/video stream, and different content keys may be used to encrypt different audio/video streams. In other words, embodiments of this application provide a stream-based encryption and decryption mechanism, compared with the existing end-to-end encryption and decryption mechanism, this further improves security of audio/video stream transmission.

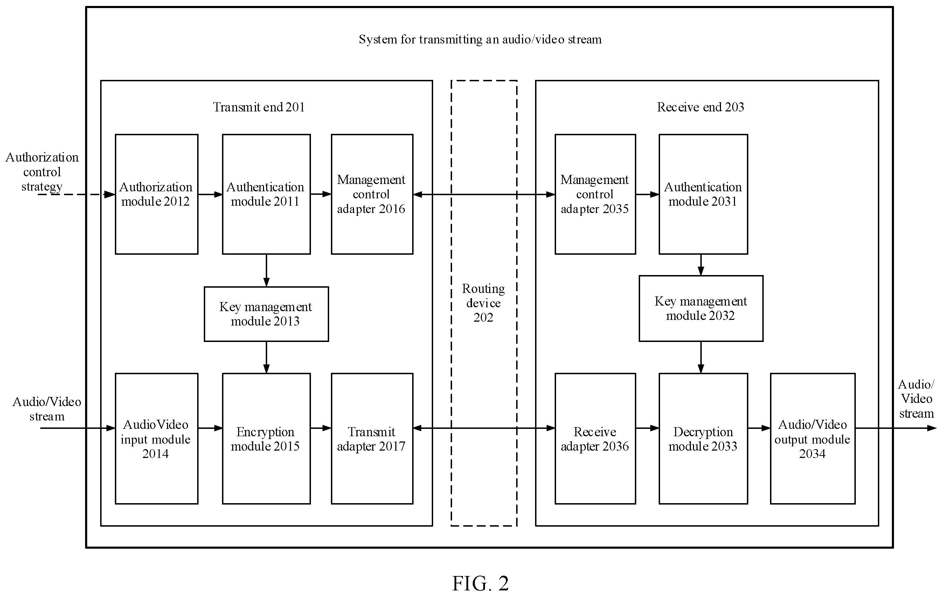

The audio/video stream transmission method provided in this embodiment of this application may be applied to an audio/video stream transmission system shown in FIG. 2. As shown in FIG. 2, the system includes a transmit end 201 of an audio/video stream, a routing device 202, and a receive end 203 of the audio/video stream. The transmit end 201 sends the audio/video stream to the receive end 203 via the routing device 202. The transmit end 201 is a start point of audio/video stream transmission, and the receive end 203 is an end point of audio/video stream transmission. It should be noted that the routing device 202 is configured to forward the audio/video stream, but does not process the audio/video stream, for example, does not decrypt and then encrypt the audio/video stream.

Functional modules of the transmit end 201 may include an authentication module 2011, an authorization module 2012, a key management module 2013, an audio/video input module 2014, and an encryption module 2015. For connection relationships between the modules, refer to FIG. 2. The authentication module 2011 is configured to perform authentication and key agreement with the receive end 203. The authorization module 2012 is configured to perform authorization control on the receive end 203 according to an authorization control strategy of the audio/video stream. Optionally, the authorization module 2012 may interconnect with an external system to obtain the authorization control strategy. The key management module 2013 is configured to generate a content key for encrypting the audio/video stream, and generate an encryption description packet and a key distribution packet. The audio/video input module 2014 is configured to receive the audio/video stream, and the encryption module 2015 is configured to obtain the content key from the key management module 2013 and encrypt the audio/video stream by using the content key.

Optionally, the transmit end 201 further includes a management control adapter 2016 and a transmit adapter 2017. The management control adapter 2016 is configured to pack (that is, encapsulate) and send data related to the authentication and key agreement procedure performed by the transmit end 201. The transmit adapter 2017 may also be referred to as a sending module, and is configured to pack an encrypted audio/video stream, an encryption description packet, and the key distribution packet, and send the packed audio/video stream to the receive end 203 through an audio/video stream transmission channel.

Functional modules of the receive end 203 may include an authentication module 2031, a key management module 2032, a decryption module 2033, and an audio/video output module 2034. The authentication module 2031 is configured to perform authentication and key agreement with the transmit end 201. The key management module 2032 is configured to obtain the content key for decrypting the encrypted audio/video stream based on one or more of the encryption description packet and the key distribution packet. The decryption module 2033 is configured to obtain the content key from the key management module 2032 and use the content key to decrypt the audio/video streams. The audio/video output module 2034 is configured to output and display the decrypted audio/video stream.

Optionally, the receive end 203 further includes a management control adapter 2035 and a receive adapter 2036. The management control adapter 2035 is configured to pack (that is, encapsulate), send, and the like data related to the authentication and key agreement procedure performed by the receive end 203. The receive adapter 2036 is configured to unpack (that is, parse) the audio/video stream.

With reference to FIG. 2, it may be understood that the audio/video stream transmission method provided in this embodiment of this application includes the following several phases:

> Phase 1: Authentication and key agreement performed between the transmit end and the receive end;
> Phase 2: Authorization control performed by the transmit end on the receive end; and
> Phase 3: Sending and receiving of an audio/video stream.

The following separately describes the foregoing phase 1, phase 2, and phase 3 in detail.

Phase 1: Authentication and key agreement

In this embodiment of this application, the transmit end of the audio/video stream interacts with the receive end of the audio/video stream based on an ECDHE protocol to complete authentication and key agreement. The ECDHE protocol is a Diffie-Hellman (DH) key agreement protocol based on an elliptic curve signcryption scheme (Elliptic Curve, EC). Through authentication and key agreement, the transmit end verifies a certificate of the receive end, and the transmit end negotiates a shared master key with the receive end. It should be understood that, a root certificate (for example, a CA root certificate) and a certificate revocation list (certificate revocation list, CRL) are built in the transmit end, and a receiver certificate, a level-2 certificate (for example, a CA level-2 certificate), and a private key (rxPriKey) of the receive end are built in the receive end.

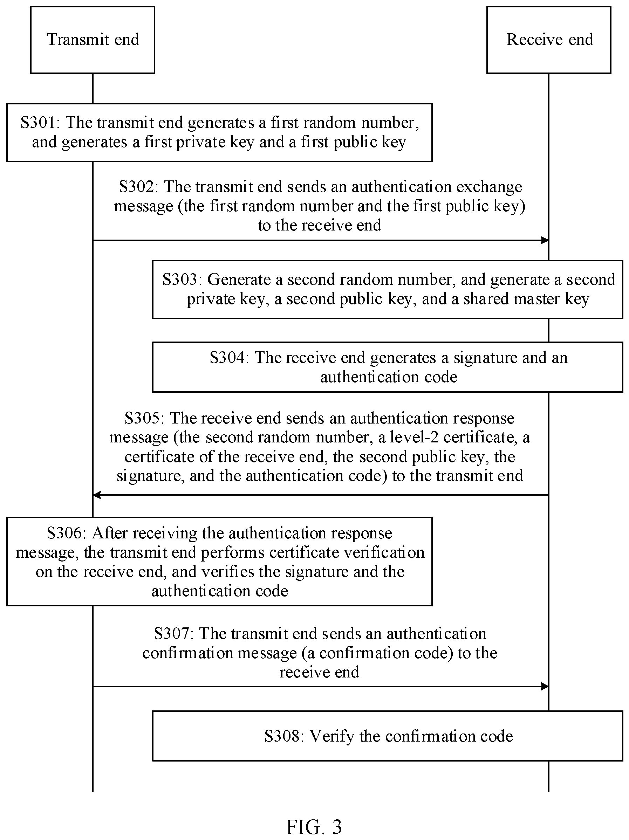

As shown in FIG. 3, the authentication and key agreement procedure includes the following steps:
S301: The transmit end generates a first random number, and generates a first private key and a first public key.

The first random number may be denoted as Random_A, the first private key generated by the transmit end is denoted as txDHPrivate, and the first public key is denoted as txDHPublic.

Optionally, the transmit end generates the first private key based on the ECDHE protocol, that is, the first private key meets a condition specified in the ECDHE protocol, and then the transmit end calculates the first public key based on the first private key according to an SM2 algorithm. For a generation process of the first public key, refer to an SM2 elliptic curve public key cryptography algorithm in the GB/T 32918.1-2016 information security technology.

S302: The transmit end sends an authentication exchange message (that is, an AKE_AUTHKEY_EXCHANGE message) to a receive end, where the authentication exchange message carries the first random number and the first public key.

S303: After receiving the authentication exchange message, the receive end generates a second random number, and generates a second private key, a second public key, and a shared master key.

The second random number may be denoted as Random_B, the second private key generated by the receive end is denoted as rxDHPrivate, and the second public key is denoted as rxDHPublic. A method for generating the second private key and the second public key is similar to the foregoing method for generating the first private key and the first public key.

Then, the receive end generates the shared master key according to a Diffie-Hellman key agreement algorithm and according to the following formula:

$$K_m = \text{txDHPublic}^\wedge \text{rxDHPrivate}$$

$K_m$ represents the shared master key, txDHPublic is the first public key, and rxDHPrivate is the second private key.

S304: The receive end generates a signature and an authentication code.

The receive end generates the signature according to a signature algorithm (sign algorithm). A specific formula is as follows:

$$\text{signAuth} = \text{sign (Random\_A} \| \text{Random\_B} \| \text{txDHPublic} \| \text{rxDHPublic, rxPriKey)}$$

signAuth represents the signature of the receive end, Random_A is the first random number, Random_B is the second random number, txDHPublic is the first public key, rxDHPublic is the second public key, rxPriKey is the private key of the receive end, and "∥" is a connection symbol used to concatenate character strings before and after the symbol. Optionally, the signature algorithm may be an SM2 algorithm.

In this embodiment of this application, the receive end generates the authentication code according to a hash message authentication code (hash-based message authentication code, HMAC) algorithm. A specific formula is as follows:

$$\text{HmacAuth} = \text{HMAC (signAuth, authKey)}$$

HmacAuth indicates the authentication code, signAuth indicates the generated signature, authKey indicates an authentication key, and authKey is derived from the shared master key. Optionally, the HMAC algorithm may be an HMAC-SM3 algorithm.

The receive end generates authKey based on a key derivation function (key derivation function, KDF). A specific formula is as follows:

$$\text{authKey} = \text{KDF } (K_m, \text{Random\_A} \| \text{Random\_B, "HMACKey", 256)}$$

authKey represents the authentication key, $K_m$ is the shared master key, Random_A is the first random number, Random_B is the second random number, HMACKey is a fixed parameter of the HMAC algorithm, and 256 represents that the authentication key is 256 bits. Optionally, the KDF algorithm may be a KDF-SM3 algorithm.

S305: The receive end sends an authentication response message (that is, an AKE_AUTHKEY_ACK message) to the transmit end, where the authentication message includes the second random number (Random_B), a level-2 certificate, a certificate of the receive end, the second public key (rxDHPublic), the signature (signAuth), and the authentication code (HmacAuth).

S306: After receiving the authentication response message, the transmit end performs certificate verification on the receive end, and verifies the signature and the authentication code.

First, the transmit end first verifies, based on the CRL, whether the level-2 certificate of the receive end and the certificate of the receive end (the certificate of the receive end is a level-3 certificate) are revoked, and if the certificates are not revoked, verifies the level-2 certificate of the receive end based on the root certificate built in the transmit end. After the level-2 certificate is successfully verified, the transmit end verifies the certificate of the receive end based on the level-2 certificate. For related content of certificate verification, refer to the conventional technology. Details are not described in embodiments of this application.

Then, after the certificate verification succeeds, the transmit end verifies signAuth according to the following verification formula:

$$\mathrm{Result=Verify\ (Random\_A\|Random\_B\|txDHPublic\|rxDHPublic,\ signAuth,\ key1)}$$

Result represents a check result, and when the check result is true, it indicates that the check succeeds, and when the check result is false, it indicates that the check fails. Random_A is the first random number, Random_B is the second random number, txDHPublic is the first public key, rxDHPublic is the second public key, signAuth is a to-be-verified signature, key1 represents a public key in the certificate of the receive end, and Verify represents a check algorithm. It should be understood that the algorithm for verifying the signature is related to the algorithm for generating the signature.

Before verifying HmacAuth, the transmit end generates a shared master key according to the Diffie-Hellman key agreement algorithm and according to the following formula:

$$K_m=\mathrm{rxDHPublic^\wedge txDHPrivate}$$

$K_m$ represents the shared master key, rxDHPublic is the second public key, and txDHPrivate is the first private key. It should be noted that the shared master key generated by the transmit end is the same as the shared master key generated by the receive end in S303.

Then, the transmit end derives the authentication key (authKey) according to the foregoing formula, calculates an authentication code based on the authentication key, and compares whether the calculated authentication code is consistent with an authentication code in a received authentication effect message. If consistent, the transmit end successfully verifies the verification code; otherwise, the transmit end fails to verify the verification code.

S307: The transmit end sends an authentication confirmation message (that is, AKE_AUTHKEY_CONFIRM) to the receive end, where the authentication confirmation message includes a confirmation code.

The confirmation code may be represented as authComfirm, and a calculation formula of the confirmation code is as follows:

$$\mathrm{authComfirm=HMAC\ (Random\_A\|Random\_B\|txDHPublic\|rxDHPublic,\ authKey)}$$

authComfirm represents the confirmation code, Random_A is the first random number, Random_B is the second random number, txDHPublic is the first public key, rxDHPublic is the second public key, and authKey is the foregoing authentication key.

S308: After receiving the authentication confirmation message, the receive end verifies the confirmation code.

In this embodiment of this application, the receive end also calculates the confirmation code according to the formula in S307, and compares whether the calculated confirmation code is consistent with the confirmation code in the received confirmation message. If the calculated confirmation code is consistent with the confirmation code in the received confirmation message, the confirmation code is successfully verified; otherwise, the confirmation code is not successfully verified.

In conclusion, the transmit end and the receive end complete authentication and key agreement by using S301 to S308. Specifically, the authentication module of the transmit end interacts with the authentication module of the receive end shown in FIG. 2 to complete the authentication and key agreement procedure. Through the authentication and key agreement procedure, the transmit end and the receive end exchange random numbers and generate the shared master keys. Specifically, for the transmit end, the shared master key, the first random number, and the second random number may be obtained, and the shared master key, the first random number, and the second random number are set in the key management module of the transmit end; for the receive end, the shared master key, the first random number, and the second random number may be obtained, and the shared master key, the first random number, and the second random number are set in the key management module of the receive end.

Phase 2: Authorization control

After authentication and key agreement between the transmit end and the receive end is completed, the transmit end needs to authorize the receive end before sending the audio/video stream to the receive end. After the transmit end successfully authorizes the receive end, the transmit end sends the audio/video stream to the receive end. Specifically, the transmit end authorizes the receive end according to the authorization control strategy (Rights Control strategy). For content of the authorization control strategy, refer to the following Table 1.

Table 1

| Field | Description |
|---|---|
| Version | Protocol revision |
| Security level | Security level |
| Count | Upper limit quantity of receivers |

The protocol version indicates a version number of a protocol corresponding to the audio/video stream transmission method in this embodiment of this application. For example, the version number of the protocol may be 0X01. With evolution of the protocol subsequently, there may be more version numbers. The security level indicates a security level that should be supported by the receive end. For example, a security level of a device may be divided into three levels, which are respectively L1, L2, and L3 in ascending order. A higher security level indicates better security of the device. The upper limit of quantity of receivers indicates a maximum quantity of receivers that can transmit a video stream with the transmit end.

In this embodiment of this application, that the transmit end authorizes the receive end specifically includes: The transmit end verifies a protocol version, a security level, and a quantity of receive ends of the receive end according to the authorization control strategy shown in Table 1, and the transmit end successfully authorizes the receive end when the following condition 1 to condition 3 are met.

Condition 1: A protocol version number in the authorization control strategy is greater than or equal to a protocol version number negotiated by the two ends in an authentication process.

Condition 2: A security level in the authorization control strategy is less than or equal to a security level of the receive end.

Condition 3: An upper limit value of a quantity of receivers in the authorization control strategy is less than or equal to a current quantity of existing receive ends.

It should be noted that, in a process of transmitting the audio/video stream between the transmit end and the receive end, if the authorization control strategy of the transmit end changes, the transmit end also needs to re-authorize the receive end. For example, if the transmit end of the audio/video stream receives a new authorization control strategy of the current audio/video stream during the process of sending the audio/video stream, the transmit end checks whether the receive end of the audio/video stream that receives the current audio/video stream satisfies the new authorization control strategy in sequence. If the receive end of the audio/video stream satisfies the new authorization control strategy, the receive end of the audio/video stream is successfully authorized; otherwise, the receive end of the audio/video stream fails to be authorized. The receive end of the audio/video stream that fails to be authorized does not affect the receive end of the audio/video stream that is successfully authorized to receive the audio/video stream.

Phase 3: Sending and receiving of the audio/video stream

The audio/video stream transmission method provided in this embodiment of this application may be applied to a unicast scenario, or may be applied to a multicast scenario. The following embodiments separately describe the audio/video stream transmission method from perspectives of the unicast scenario and the multicast scenario.

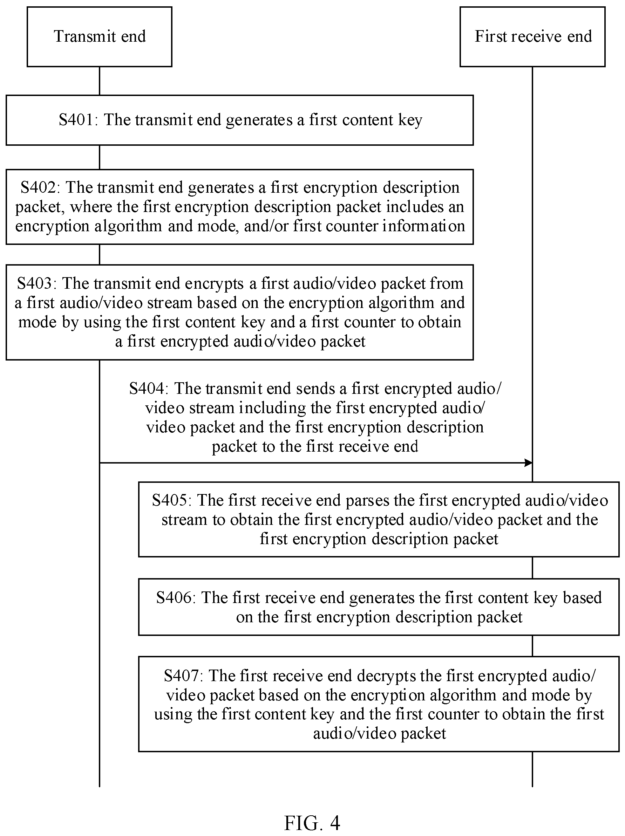

As shown in FIG. 4, in a unicast scenario, an audio/video stream transmission method provided in this embodiment of this application includes the following steps.

S401: A transmit end generates a first content key.

The first content key is used to encrypt an audio/video stream in the unicast scenario.

Specifically, the transmit end derives the first content key based on a shared master key between the transmit end and a first receive end, an identifier of the first content key, a random number generated by the transmit end, a random number generated by the first receive end, an identifier of the transmit end, and an identifier of the first receive end. A derivation formula of the first content key is specifically as follows:

$$\text{CK1} = \text{KDF}(K_m, \text{Random\_A} \| \text{Random\_B} \| \text{ID\_A} \| \text{ID\_B} \| \text{CKId}, \text{"Unicast Content Key"}, 128)$$

CK1 represents the first content key, $K_m$ is the shared master key, Random_A is the random number generated by the transmit end (that is, the first random number), Random_B is the random number generated by the receive end (that is, the second random number), ID_A is the identifier of the transmit end, ID_B is the identifier of the receive end (the transmit end obtains the identifier from a certificate of the receive end), CKId is the identifier of the first content key (the transmit end may randomly generate a unique identifier as the identifier of the first content key), and 128 indicates that the first content key is 128 bits. The KDF algorithm is a KDF-SM3 algorithm.

S402: The transmit end generates a first encryption description packet.

The foregoing first encryption description packet is generated by a key management module of the transmit end, and the first encryption description packet includes at least one of the following: the identifier of the first content key, the identifier of the transmit end, an encryption algorithm and mode (the mode is a mode of an encryption algorithm), and first counter information. The first counter information is high 64 bits of a first counter, and the first counter is configured to encrypt the audio/video stream. It can be learned that, the content key, the encryption algorithm and mode, and the counter for encrypting the audio/video stream may be learned from the first encryption description packet.

Optionally, the encryption description packet may further include more content. Table 2 is a packet format of the encryption description packet in this embodiment of this application.

Table 2

| Field | Quantity of bits | Description |
|---|---|---|
| Type | 8 | Data packet type |
| Version | 8 | Packet version number |
| Len | 8 | Packet length |
| CurCKId | 14 | Identifier of a currently used content key |
| CurCKType | 2 | Type of the currently used content key |
| NextCKId | 14 | Identifier of a next-used content key |
| NextCKType | 2 | Type of the next-used content key |
| ID_A | 48 | Identifier of a transmit end |
| EncAlgorithm | 4 | Encryption algorithm and mode |
| CtrHigh | 64 | High 64 bits of a counter used for encryption |
| Reserved | 20 | Reserved |

The type of the content key is unicast or multicast. For example, if CurCKType is 00b, it indicates that the type of the content key is unicast, that is, the content key is used in a unicast scenario; and if CurCKType is 01b, it indicates that the type of the content key is multicast, that is, the content key is used in a multicast scenario.

It should be understood that the counter for encrypting the audio/video stream is 128 bits. CtrHigh in Table 2 provides the high 64 bits of the counter, and low 64 bits of the counter are 0 by default. The high 64 bits of the counter for encrypting the audio/video stream are generated by the transmit end based on a random number, and are unique. On the basis of the initially generated high 64 bits of the counter, when a new encryption description packet is subsequently generated, high 64 bits of a counter in the new encryption description packet are high 64 bits of a counter in a previous encryption description packet plus 1. Optionally, the counter may increase by 1 each time a 16-byte audio/video stream packet is encrypted.

It should be noted that CKId in the foregoing formula for generating the first content key may be CurCKId in the first encryption description packet, or may be NextCKId.

In the first encryption description packet in S402, the type of the content key is unicast, that is, the type of the content key is 00b.

Optionally, after generating the first content key and the first encryption description packet, the key management module sets the first content key, the first counter, and the encryption algorithm to the encryption module, or sets the first content key and the first encryption description packet to the encryption module.

S403: The transmit end encrypts a first audio/video packet from a first audio/video stream based on the encryption algorithm and mode by using the first content key and the first counter to obtain a first encrypted audio/video packet.

In this embodiment of this application, after receiving an audio/video signal of the first audio/video stream, an audio/video input module of the transmit end packs the audio/video signal into an audio/video packet (referred to as the first audio/video packet below), and sends the first audio/video packet to the encryption module. Then, the encryption module encrypts the first audio/video packet by using the first content key and the first counter according to an encryption algorithm set in the encryption module, to obtain the first encrypted audio/video packet. Alternatively, the encryption module obtains the first counter information, and the encryption algorithm and mode from the first encryption description packet received by the key management module, and then encrypts the first audio/video packet based on the encryption algorithm and mode by using the first content key and the first counter to obtain the first encrypted audio/video packet.

Optionally, in this embodiment of this application, the first audio/video packet may be encrypted according to an SM4-CTR algorithm. For the SM4-CTR algorithm, refer to the conventional technology. Details are not described herein again.

S404: The transmit end sends a first encrypted audio/video stream including the first encrypted audio/video packet and the first encryption description packet to the first receive end.

Optionally, a transmit adapter of the transmit end includes the first encryption description packet in a vertical blanking region of the first encrypted audio/video packet to obtain the first encrypted audio/video stream, and then sends the first encrypted audio/video stream to the first receive end.

It may be understood that, a video frame of the audio/video stream is used as an example, and the video frame includes a vertical blanking region, a horizontal blanking region, and a valid video region. There is a vertical blanking region packet header flag in a vertical blanking region of each video frame, to indicate start of the vertical blanking region. There is a horizontal blanking region packet header flag in the horizontal blanking region of the video frame, to indicate start of the horizontal blanking region.

The first encryption description packet may be transmitted in the vertical blanking region, and the first encryption description packet may be located after a vertical blanking region packet header and is completely transmitted before a first horizontal blanking region packet header, to implement frame-level content protection control of an audio/video stream packet.

A transmit adapter may pack valid video data of the video frame into a valid video packet, and transmit the valid video packet in the valid video region. Optionally, a content protection flag bit may be added to an encrypted valid video packet, and is set to 1, and a content protection flag bit of an unencrypted valid video packet may be set to 0.

Audio data of the audio/video stream and configuration data related to an audio/video service may be packed into an audio data packet, and transmitted in a blanking region (the vertical blanking region and/or the horizontal blanking region). Optionally, a content protection flag bit may be added to an encrypted audio packet, and is set to 1, and a content protection flag bit of an unencrypted audio packet may be set to 0.

S405: The first receive end parses the first encrypted audio/video stream to obtain the first encrypted audio/video packet and the first encryption description packet.

In this embodiment of this application, after receiving the first encrypted audio/video stream from the transmit end, a receive adapter of the first receive end parses the first encrypted audio/video stream to obtain the first encrypted audio/video packet and the first encryption description packet, sends the first encrypted audio/video packet and the first encryption description packet to a decryption module of the first receive end, and sends the first encryption description packet to a key management module of the first receive end.

S406: The first receive end generates the first content key based on the first encryption description packet.

Specifically, the key management module of the first receive end determines that the type of the first content key is unicast based on the type (that is, CurCKType) of the currently used content key in the first encryption description packet, and then the key management module obtains the identifier of the currently used content key (that is, CurCKId, the identifier of the first content key) and the identifier of the transmit end from the first encryption description packet, derives the first content key according to the following formula, and sets the first content key to the decryption module of the first receive end.

$$CK1 = KDF(K_m, \text{Random\_A} \| \text{Random\_B} \| \text{ID\_A} \| \text{ID\_B} \| CKId, \text{"Unicast Content Key"}, 128)$$

$K_m$, Random_A, and Random_B are obtained by the first receive end and the transmit end through authentication and key agreement.

S407: The first receive end decrypts the first encrypted audio/video packet based on the encryption algorithm and mode by using the first content key and the first counter to obtain the first audio/video packet.

In this embodiment of this application, the decryption module of the first receive end determines the encryption algorithm and mode, and the first counter based on the first encryption description packet received from a receiving module, decrypts the first encrypted audio/video packet based on the encryption algorithm and mode by using the first content key received from the key management module and the first counter, and outputs and displays, via the audio/video output module of the first receive end, the first audio/video packet of the first audio/video stream obtained through decryption.

It should be noted that, in the process of transmitting the audio/video stream between the transmit end and the first receive end, the first content key needs to be updated in a timely manner in the following several cases.

1. For the first audio/video stream, use duration of the first content key exceeds preset duration, or a quantity of video frames encrypted by using the first content key exceeds a preset quantity. For example, the use duration of the first content key exceeds 24 hours, or the quantity of video frames encrypted by using the first content key exceeds 2592000 frames.

2. An audio/video stream transmission scenario is switched from unicast to multicast.

3. In the multicast scenario, an authorization control strategy of the first audio/video stream changes.

4. In the multicast scenario, a part of receive ends that communicate with the transmit end no longer receive the first audio/video stream, that is, quit receiving the first audio/video stream.

In this embodiment of this application, when the first content key needs to be updated, the transmit end updates four fields: CurCKId, CurCKType, NextCKId, and NextCKType in the first encryption description packet, so that after receiving the first encryption description packet, the first receive end generates a new content key based on four updated fields in the first encryption description packet. Alternatively, before updating the first content key, the transmit end may also update NextCKId in the encryption description packet. After receiving the encryption description packet, the receive end derives an updated content key in advance based on key types: NextCKType and NextCKId.

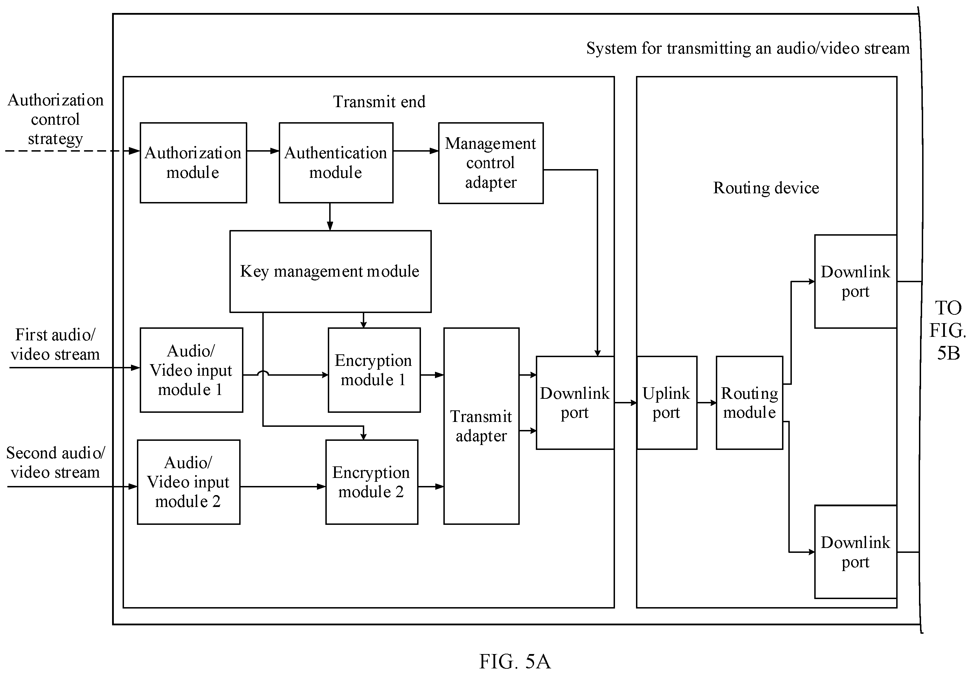

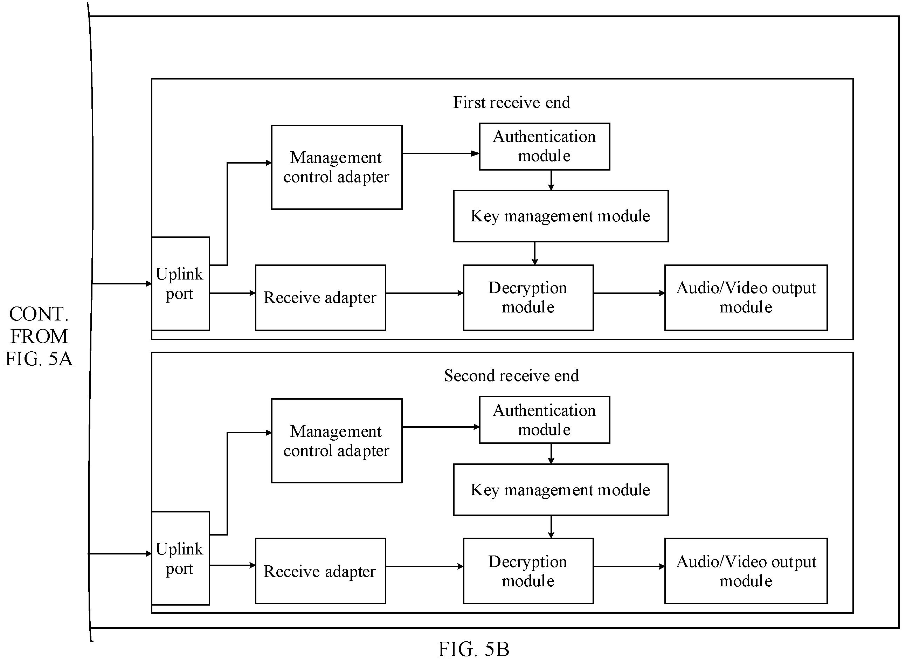

Optionally, the transmit end may interact with a plurality of receive ends to transmit audio/video streams. In an example, FIG. 5A and FIG. 5B are a diagram of a framework in which a transmit end transmits an audio/video stream to a first receive end and a second receive end. The transmit end may not only interact with the first receive end to transmit a first audio/video stream, but also interact with the second receive end to transmit a second audio/video stream. In other words, the transmit end may perform authentication and key agreement and authorization control with the second receive end, encrypt an audio/video packet from the second audio/video stream, and send an encrypted audio/video packet to the second receive end. A process in which the transmit end interacts with the second receive end to transmit the second audio/video stream is similar to the foregoing process in which the first audio/video stream is transmitted. Details are not described in embodiments of this application.

It should be noted that the transmit end uses different content keys to encrypt different audio/video streams. For example, the transmit end encrypts the first audio/video stream by using a content key 1, and encrypts the second audio/video stream by using a content key 2.

In conclusion, in the audio/video stream transmission method provided in this embodiment of this application, after the transmit end sends an encrypted audio/video stream, another device (for example, a routing device) between the transmit end and a receive end does not decrypt and then encrypt the encrypted audio/video stream. Compared with a conventional technology, in this method, a possibility of attacking the audio/video stream in an intermediate downstream device can be eliminated. Therefore, security of audio/video stream transmission can be improved.

Further, in this embodiment of this application, a content key can be generated for a specific audio/video stream, and different content keys may be used to encrypt different audio/video streams, to implement stream-based encryption and decryption. Compared with an existing end-to-end encryption and decryption mechanism, this further improves security of audio/video stream transmission.

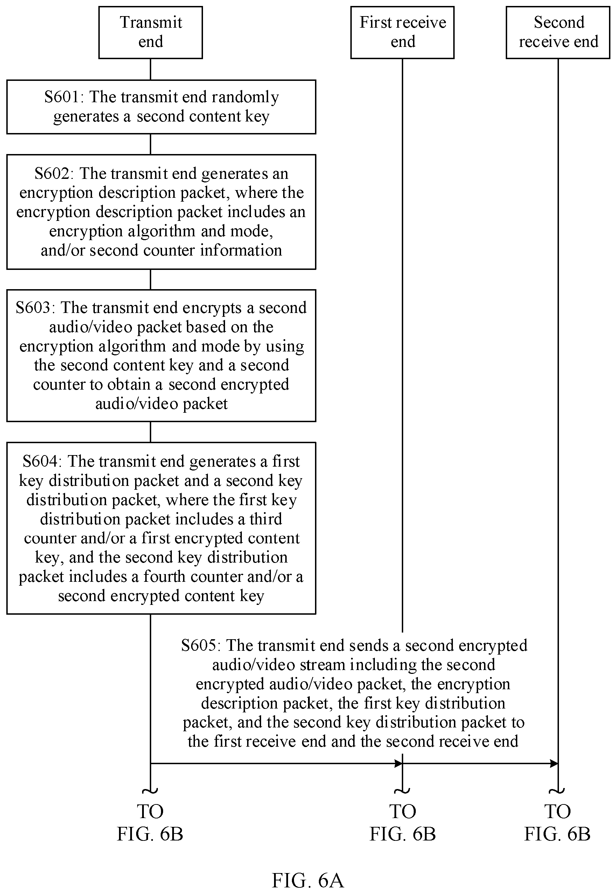

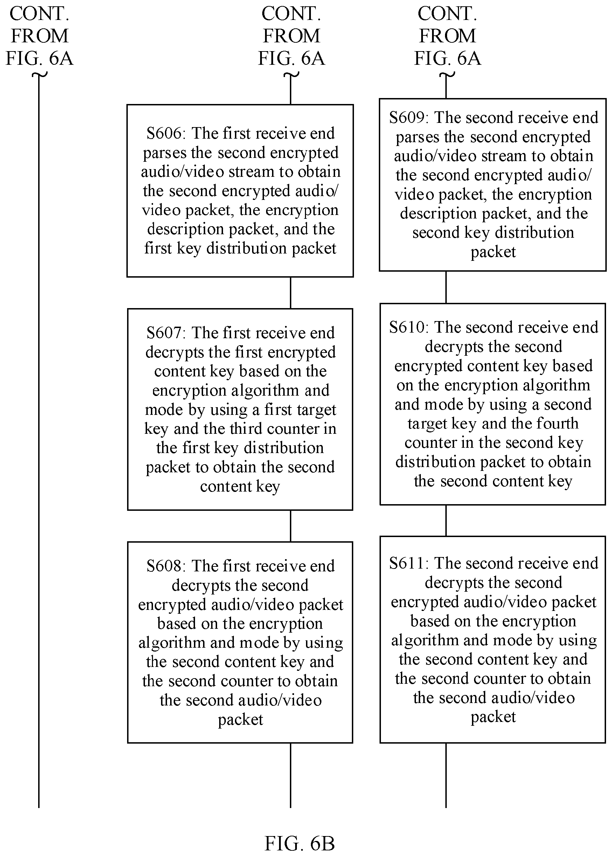

As shown in FIG. 6A and FIG. 6B, in a multicast scenario, an audio/video stream transmission method provided in this embodiment of this application includes the following steps.

S601: The transmit end randomly generates a second content key.

In this embodiment of this application, in the multicast scenario, the transmit end sends a same audio/video stream to a plurality of receive ends. After the transmit end performs authentication and key agreement and authorization control with the plurality of receive ends, a key management module of the transmit end randomly generates a unique second content key, where the second content key is used to encrypt the audio/video stream in the multicast scenario.

S602: The transmit end generates an encryption description packet.

Specifically, the key management module of the transmit end generates the encryption description packet, where the encryption description packet includes an encryption algorithm and mode, and/or second counter information, and the counter information is high 64 bits of a second counter. The encryption description packet may further include more other content. For details, refer to the format of the encryption description packet shown in Table 2. Details are not described herein again. It should be noted that a type of a content key in the encryption description packet is multicast, that is, the type of the content key is 01b.

Similar to a unicast scenario, after the key management module of the transmit end generates the second content key and the encryption description packet, the key management module sets the second content key, a first counter, and an encryption algorithm to an encryption module, or sets the second content key and the encryption description packet to the encryption module.

S603: The transmit end encrypts a second audio/video packet based on the encryption algorithm and mode by using the second content key and the second counter to obtain a second encrypted audio/video packet.

The second audio/video packet is a packet of a second audio/video stream.

In this embodiment of this application, after receiving an audio/video signal, an audio/video input module of the transmit end packs the audio/video signal into an audio/video packet (referred to as the second audio/video packet below), and sends the second audio/video packet to the encryption module. Then, the encryption module encrypts the first audio/video packet by using the second content key and the second counter according to an encryption algorithm set in the encryption module, to obtain the first encrypted audio/video packet. Alternatively, the encryption module obtains the second counter information, and the encryption algorithm and mode from the encryption description packet received by the key management module, and then encrypts the second audio/video packet based on the encryption algorithm and mode by using the second content key and the second counter to obtain the second encrypted audio/video packet.

S604: The transmit end generates a first key distribution packet and a second key distribution packet.

Specifically, the key management module of the transmit end generates the first key distribution packet and the second key distribution packet, where the first key distribution packet corresponds to a first receive end, and the second key distribution packet corresponds to a second receive end.

The first key distribution packet includes a third counter and/or a first encrypted content key, and the first encrypted content key is a key obtained by encrypting the second content key based on the encryption algorithm and mode by using a first target key and the third counter.

The second key distribution packet includes a fourth counter and/or a second encrypted content key, and the second encrypted content key is a key obtained by encrypting the second content key based on the encryption algorithm and mode by using a second target key and the fourth counter.

It can be learned that, in the multicast scenario, the second content key for encrypting the audio/video stream is transmitted through the key distribution packet, and the transmit end encrypts the second content key and then transmits an encrypted second content key. For different receive ends, the transmit end encrypts the second content key by using different target keys and counters.

The target key (for example, the first target key and the second target key) for encrypting the second content key is generated based on a shared master key between the transmit end and the receive end, a random number generated by the transmit end, a random number generated by the receive end, an identifier of the transmit end, and an identifier of the receive end. For details, refer to the following formula:

$$\text{CKEK}=\text{KDF}(K_m, \text{Random\_A}\|\text{Random\_B}\|\text{ID\_A}\|\text{ID\_B}, \text{"Content Key Encryption Key"}, 128)$$

CKEK represents the target key, $K_m$ is the shared master key between the transmit end and the receive end, Random_A is the random number generated by the transmit end, Random_B is the random number generated by the receive end, ID_A is the identifier of the transmit end, and ID_B is the identifier of the receive end.

Optionally, the key distribution packet (for example, the first key distribution packet or the second key distribution packet) may further include more content. Table 3 is a packet format of the key distribution packet in this embodiment of this application.

Table 3

| Field | Quantity of bits | Description |
|---|---|---|
| Type | 8 | Data packet type |
| Version | 8 | Packet version number |
| Len | 8 | Packet length |
| CKId | 14 | Identifier of a content key |
| Reserved | 2 | Reserved |
| ID_B | 48 | Identifier of a receive end |
| ECKCtr | 128 | Counter for encrypting the content key |
| ECK | 128 | Encrypted content key |
| Reserved | 8 | Reserved |

Specifically, the first target key is generated based on a first shared master key between the transmit end and the first receive end, the random number generated by the transmit end, the random number generated by the first receive end, the identifier of the transmit end, and the identifier of the first receive end. The second target key is generated based on a second shared master key between the transmit end and the second receive end, the random number generated by the transmit end, a random number generated by the second receive end, the identifier of the transmit end, and an identifier of the second receive end.

Refer to Table 3. A difference between content of the first key distribution packet and content of the second key distribution packet lies in that: ID_B in the first key description packet is the identifier of the first receive end, and ID_B in the second key description packet is the identifier of the second receive end. In addition, a counter of an encrypted content key in the first key distribution packet is different from a counter of an encrypted content key in the second key distribution packet. Because the first target key is different from the second target key, the encrypted content key in the first key distribution packet is different from the encrypted content key in the second key distribution packet.

S605: The transmit end sends a second encrypted audio/video stream including the second encrypted audio/video packet, the encryption description packet, the first key distribution packet, and the second key distribution packet to the first receive end and the second receive end.

Optionally, the transmit end may include the encryption description packet, the first key distribution packet, and the second key distribution packet in a vertical blanking region of the second encrypted audio/video packet to obtain the second encrypted audio/video stream, and then send the second encrypted audio/video stream to the first receive end and the second receive end.

S606: The first receive end parses the second encrypted audio/video stream to obtain the second encrypted audio/video packet, the encryption description packet, and the first key distribution packet.

In this embodiment of this application, after receiving the second encrypted audio/video stream, a receiving module of the first receive end parses the second encrypted audio/video stream to obtain the second encrypted audio/video packet, the encryption description packet, the first key distribution packet, and the second key distribution packet. Then, the first receive end filters out the first key distribution packet based on the identifier of the first receive end to obtain the second encrypted audio/video packet, the encryption description packet, and the first key distribution packet.

It should be understood that the receiving module of the first receive end sends the second encrypted audio/video packet and the encryption description packet to a decryption module of the first receive end, or the receiving module sends the second encrypted audio/video packet to the decryption module, and sets an encryption algorithm and the second counter to the decryption module. The receiving module sends the encryption description packet and the first key distribution packet to the key management module of the first receive end.

S607: The first receive end decrypts the first encrypted content key based on the encryption algorithm and mode by using the first target key and the third counter in the first key distribution packet to obtain the second content key.

The key management module of the first receive end learns, based on the type 01b of the content key in the encryption description packet, that a type of the second content key is multicast. Then, the key management module determines, based on the first key distribution packet, the third counter for encrypting the second content key, and the key management module derives the first target key, and further decrypts the first encrypted content key in the first key distribution packet based on the first target key and the third counter to obtain the second content key, and set the second content key in the decryption module of the first receive end.

S608: The first receive end decrypts the second encrypted audio/video packet based on the encryption algorithm and mode by using the second content key and the second counter to obtain the second audio/video packet.

In this embodiment of this application, after obtaining the second content key, the decryption module of the first receive end determines, based on the encryption description packet received from the receiving module, the encryption algorithm and the second counter (or obtains the encryption algorithm and the second counter that are set in the decryption module) for encrypting the second audio/video packet, and then the decryption module decrypts the second encrypted audio/video packet based on the second content key and the second counter to obtain the second audio/video packet.

S609: The second receive end parses the second encrypted audio/video stream to obtain the second encrypted audio/video packet, the encryption description packet, and the second key distribution packet.

In this embodiment of this application, after receiving the second encrypted audio/video stream, a receiving module of the second receive end parses the second encrypted audio/video stream to obtain the second encrypted audio/video packet, the encryption description packet, the first key distribution packet, and the second key distribution packet. Then, the second receive end filters out the second key distribution packet based on the identifier of the second receive end to obtain the second encrypted audio/video packet, the encryption description packet, and the second key distribution packet.

It should be understood that the receiving module of the second receive end sends the second encrypted audio/video packet and the encryption description packet to a decryption module of the second receive end, or the receiving module sends the second encrypted audio/video packet to the decryption module. The receiving module sends the encryption description packet and the second key distribution packet to the key management module of the second receive end. Optionally, after the key management module obtains the encryption algorithm and the second counter from the encryption description packet, the key management module may set the encryption algorithm and the second counter in the decryption module.

S610: The second receive end decrypts the second encrypted content key based on the encryption algorithm and mode by using the second target key and the fourth counter in the second key distribution packet to obtain the second content key.

The key management module of the second receive end learns, based on the type 01b of the content key in the encryption description packet, that a type of the second content key is multicast. Then, the key management module determines, based on the second key distribution packet, the fourth counter for encrypting the second content key, and the key management module derives the second target key, and further decrypts the second encrypted content key in the second key distribution packet based on the second target key and the fourth counter to obtain the second content key, and set the second content key in the decryption module of the second receive end.

S611: The second receive end decrypts the second encrypted audio/video packet based on the encryption algorithm and mode by using the second content key and the second counter to obtain the second audio/video packet.

In this embodiment of this application, after obtaining the second content key, the decryption module of the second receive end determines, based on the encryption description packet received from the receiving module, the encryption algorithm and the second counter (or obtains the encryption algorithm and the second counter that are set in the decryption module) for encrypting the second audio/video packet, and then the decryption module decrypts the second encrypted audio/video packet based on the second content key and the second counter to obtain the second audio/video packet.

In a possible implementation, in the multicast scenario, the key management module of the receive end may store one or more content keys obtained through decryption and identifiers of the one or more content keys into the decryption module of the receive end according to a mapping relationship. In this way, when the second content key needs to be updated, the transmit end may update an identifier of a next to-be-used content key in the encryption description packet. After the receive end receives a new encryption description packet, the decryption module of the receive end may obtain the identifier of the updated content key from the encryption description packet, and then the decryption module determines the updated content key based on the identifier of the updated content key, and decrypts a received audio/video packet based on the updated content key.

For other related content of S601 to S611, refer to the descriptions of S401 to S407. Details are not described herein again.

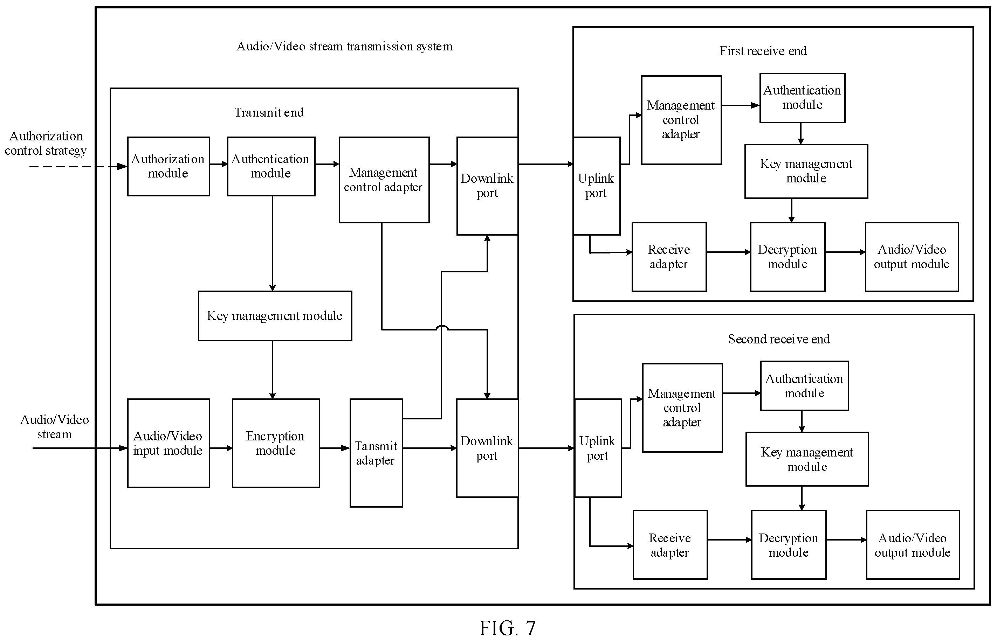

FIG. 7 is a diagram of a framework in which a transmit end performs audio/video stream transmission with a first receive end and a second receive end. The transmit end may directly communicate with the first receive end and the second receive end, that is, there is no routing device between the transmit end and the first receive end and between the transmit end and the second receive end, and the transmit end separately communicates with the first receive end and the second receive end through different downlink ports.

In conclusion, in the audio/video stream transmission method provided in this embodiment of this application, after the transmit end sends an encrypted audio/video stream, another device (for example, a routing device) between the transmit end and a receive end does not decrypt and then encrypt the encrypted audio/video stream. Compared with a conventional technology, in this method, a possibility of attacking the audio/video stream in an intermediate downstream device can be eliminated. Therefore, security of audio/video stream transmission can be improved.

Further, in this embodiment of this application, a content key can be generated for a specific audio/video stream, and different content keys may be used to encrypt different audio/video streams, to implement stream-based encryption and decryption. Compared with an existing end-to-end encryption and decryption mechanism, this further improves security of audio/video stream transmission.

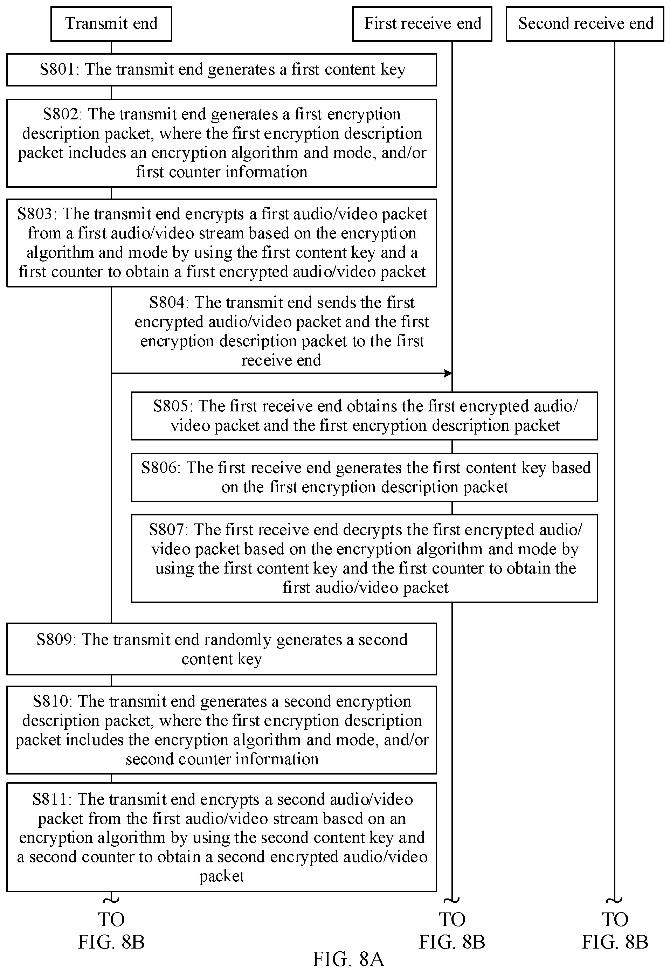

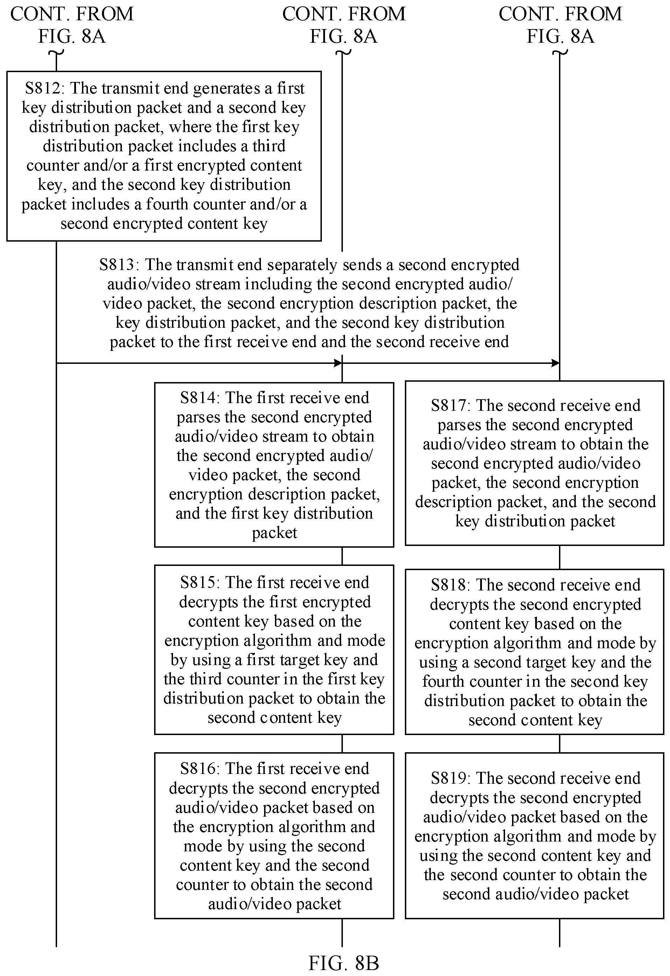

In addition, the audio/video stream transmission method provided in this embodiment of this application may be further applied to a unicast-to-multicast scenario. As shown in FIG. 8A and FIG. 8B, the audio/video stream transmission method may include the following steps.

S801: A transmit end generates a first content key.

The first content key is used to encrypt an audio/video stream in a unicast scenario, and the first content key is derived by the transmit end. For details, refer to the process of generating the first content key in S401.

S802: The transmit end generates a first encryption description packet.

The first encryption description packet includes at least one of the following: an identifier of the first content key, an identifier of the transmit end, an encryption algorithm and mode, and first counter information. The first encryption description packet may indicate the first content key, the first counter information is high 64 bits of a first counter, and the first counter is configured to encrypt the audio/video stream.

S803: The transmit end encrypts a first audio/video packet from a first audio/video stream based on the encryption algorithm and mode by using the first content key and the first counter to obtain a first encrypted audio/video packet.

S804: The transmit end sends a first encrypted audio/video stream including the first encrypted audio/video packet and the first encryption description packet to a first receive end.

S805: The first receive end parses the first encrypted audio/video stream to obtain the first encrypted audio/video packet and the first encryption description packet.

S806: The first receive end generates the first content key based on the first encryption description packet.

S807: The first receive end decrypts the first encrypted audio/video packet based on the encryption algorithm and mode by using the first content key and the first counter to obtain the first audio/video packet.

It should be understood that, that the transmit end sends the first audio/video packet to the first receive end is the unicast scenario, and then the transmit end switches to the multicast scenario. For example, the transmit end sends a second audio/video packet to the first receive end and the second receive end. It should be noted that the first audio/video packet and the second audio/video packet come from a same audio/video stream (for example, the first audio/video stream).

S809: The transmit end randomly generates a second content key.

The second content key is used to encrypt an audio/video stream in the multicast scenario.

S810: The transmit end generates a second encryption description packet.

The second encryption description packet includes the encryption algorithm and mode, and/or second counter information, and the second counter information is high 64 bits of a second counter

S811: The transmit end encrypts a second audio/video packet from the first audio/video stream based on the encryption algorithm and mode by using the second content key and the second counter to obtain a second encrypted audio/video packet.

S812: The transmit end generates a first key distribution packet and a second key distribution packet.

The first key distribution packet includes a third counter and/or a first encrypted content key, and the first encrypted content key is a key obtained by encrypting the second content key based on the encryption algorithm and mode by using a first target key and the third counter. The second key distribution packet includes a fourth counter and/or a second encrypted content key, and the second encrypted content key is a key obtained by encrypting the second content key based on the encryption algorithm and mode by using a second target key and the fourth counter.

S813: The transmit end separately sends a second encrypted audio/video stream including the second encrypted audio/video packet, the second encryption description packet, the key distribution packet, and the second key distribution packet to the first receive end and a second receive end.

S814: The first receive end parses the second encrypted audio/video stream to obtain the second encrypted audio/video packet, the second encryption description packet, and the first key distribution packet.

S815: The first receive end decrypts the first encrypted content key based on the encryption algorithm and mode by using the first target key and the third counter in the first key distribution packet to obtain the second content key.

Specifically, the first receive end determines, based on a type of a content key in the second encryption description packet, that a type of the second content key is multicast, then the first receive end derives the first target key, determines, from the first key distribution packet, the third counter for encrypting the second content key and the first encrypted content key, and decrypts the first encrypted content key based on the target key and the third counter.

S816: The first receive end decrypts the second encrypted audio/video packet based on the encryption algorithm and mode by using the second content key and the second counter to obtain the second audio/video packet.

Specifically, the first receive end determines the second counter and an encryption algorithm based on the second encryption description packet, and then decrypts the second encrypted audio/video packet by using the second counter and the second content key to obtain the second audio/video packet.

S817: The second receive end parses the second encrypted audio/video stream to obtain the second encrypted audio/video packet, the second encryption description packet, and the second key distribution packet.

S818: The second receive end decrypts the second encrypted content key based on the encryption algorithm and mode by using the second target key and the fourth counter in the second key distribution packet to obtain the second content key.

The second receive end determines, based on a type of a content key in the second encryption description packet, that a type of the second content key is multicast, then the second receive end derives the second target key, determines, from the second key distribution packet, the fourth counter for encrypting the second content key and the second encrypted content key, and decrypts the second encrypted content key based on the second target key and the fourth counter.

S819: The second receive end decrypts the second encrypted audio/video packet based on the encryption algorithm and mode by using the second content key and the second counter to obtain the second audio/video packet.

Similarly, the second receive end determines the second counter and an encryption algorithm based on the second encryption description packet, and then decrypts the second encrypted audio/video packet by using the second counter and the second content key to obtain the second audio/video packet.

For detailed description of each step of the audio/video stream transmission method in the unicast-to-multicast scenario, refer to the detailed content of each step in the unicast scenario and each step in the multicast scenario. Details are not described herein again.

Optionally, in a subsequent processing for transmitting the audio/video stream, when either of the first receive end or the second receive end no longer receives the first audio/video stream, that is, one receive end quits receiving the first audio/video stream, multicast may also be switched to unicast. Specifically, the transmit end updates the second encryption description packet, switches the type of the content key in the second encryption description packet to the unicast type, and no longer sends the key distribution packet. The transmit end communicates with the receive end according to the audio/video stream transmission method in the unicast scenario. For details, refer to related content in the foregoing embodiment, and details are not described herein again.

Correspondingly, an embodiment of this application provides a transmit end. In this embodiment of this application, the transmit end may be divided into functional modules based on the foregoing method example, for example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

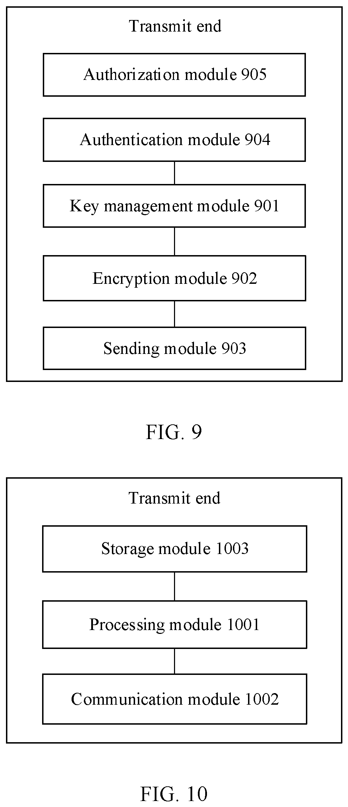

When each functional module is obtained through division based on each corresponding function, FIG. 9 is a diagram of a possible structure of a transmit end in the foregoing embodiment. As shown in FIG. 9, the transmit end includes a key management module 901, an encryption module 902, and a sending module 903.

In a unicast scenario, the key management module 901 is configured to: generate a first content key, where the first content key is used to encrypt an audio/video stream in the unicast scenario; and generate a first encryption description packet, where the first encryption description packet includes an encryption algorithm and mode, and/or first counter information, and the first counter information is high 64 bits of a first counter, for example, perform S401, S402, S801, and S802 in the foregoing method embodiments. The encryption module 902 is configured to encrypt a first audio/video packet based on the encryption algorithm and mode by using the first content key and the first counter to obtain a first encrypted audio/video packet, where the first audio/video packet is a packet of a first audio/video stream, for example, perform S403 and S803 in the foregoing method embodiments. The sending module 903 is configured to send a first encrypted audio/video stream including the first encrypted audio/video packet and the first encryption description packet to a first receive end, for example, perform S404 and S804 in the foregoing method embodiments.

Optionally, the first encryption description packet further includes an identifier of the first content key and/or an identifier of the transmit end. The key management module 901 is specifically configured to derive the first content key based on a shared master key between the transmit end and the first receive end, the identifier of the first content key, a random number generated by the transmit end, a random number generated by the first receive end, the identifier of the transmit end, and an identifier of the first receive end.

Optionally, the sending module 903 is specifically configured to: include the first encryption description packet in a vertical blanking region of the first encrypted audio/video packet to obtain the first encrypted audio/video stream, and send the first encrypted audio/video stream to the first receive end.

Optionally, the transmit end may further include an authentication module 904. The authentication module 904 is configured to initiate an authentication and key agreement procedure to the first receive end to obtain the shared master key and the random number generated by the first receive end.

Optionally, the transmit end may further include an authorization module 905. The authorization module 905 is configured to authorize the first receive end according to an authorization control strategy of the first audio/video stream.

Optionally, after the unicast scenario is switched to a multicast scenario, the key management module 901 is further configured to randomly generate a second content key, where the second content key is used to encrypt an audio/video stream in the multicast scenario, for example, perform S809 in the foregoing method embodiment; and generate a second encryption description packet, where the second encryption description packet includes the encryption algorithm and mode, and/or second counter information, and the second counter information is high 64 bits of a second counter, for example, perform S810 in the foregoing method embodiment. The encryption module 902 is further configured to encrypt a second audio/video packet based on the encryption algorithm and mode by using the second content key and the second counter to obtain a second encrypted audio/video packet, where the second audio/video packet is a packet of the first audio/video stream, for example, perform S811 in the foregoing method embodiment. The key management module 901 is further configured to generate a first key distribution packet and a second key distribution packet, where the first key distribution packet includes a third counter and/or a first encrypted content key, and the first encrypted content key is a key obtained by encrypting the second content key based on the encryption algorithm and mode by using a first target key and the third counter; and the second key distribution packet includes a fourth counter and/or a second encrypted content key, and the second encrypted content key is a key obtained by encrypting the second content key based on the encryption algorithm and mode by using a second target key and the fourth counter, for example, perform S812 in the foregoing method embodiment. The sending module 903 is further configured to separately send a second encrypted audio/video stream including the second encrypted audio/video packet, the second encryption description packet, the first key distribution packet, and the second key distribution packet to the first receive end and a second receive end, for example, perform S813 in the foregoing method embodiment.

In a multicast scenario, the key management module 901 is configured to randomly generate a second content key, where the second content key is used to encrypt an audio/video stream in the multicast scenario; for example, perform S601 in the foregoing method embodiment; and generate an encryption description packet, where the encryption description packet includes an encryption algorithm and mode, and/or second counter information, and the second counter information is high 64 bits of a second counter, for example, perform S602 in the foregoing method embodiment. The encryption module 902 is configured to encrypt a second audio/video packet based on the encryption algorithm and mode by using the second content key and the second counter to obtain a second encrypted audio/video packet, for example, perform S603 in the foregoing method embodiment. The key management module 901 is further configured to generate a first key distribution packet and a second key distribution packet, where the first key distribution packet includes a third counter and/or a first encrypted content key, and the first encrypted content key is a key obtained by encrypting the second content key based on the encryption algorithm and mode by using a first target key and the third counter; and the second key distribution packet includes a fourth counter and/or a second encrypted content key, and the second encrypted content key is a key obtained by encrypting the second content key based on the encryption algorithm and mode by using a second target key and the fourth counter, for example, perform S604 in the foregoing method embodiment. The sending module 903 is configured to separately send a second encrypted audio/video stream including the second encrypted audio/video packet, the encryption description packet, the first key distribution packet, and the second key distribution packet to a first receive end and a second receive end, for example, perform S605 in the foregoing method embodiment.

Optionally, the sending module 903 is specifically configured to: include the encryption description packet, the first key distribution packet, and the second key distribution packet in a vertical blanking region of the second encrypted audio/video packet to obtain the second encrypted audio/video stream, and separately send the second encrypted audio/video stream to the first receive end and the second receive end.

Optionally, the authentication module 904 is configured to: initiate an authentication and key agreement procedure to the first receive end to obtain a first shared master key and a random number generated by the first receive end; and initiate an authentication and key agreement procedure to the second receive end to obtain a second shared master key and a random number generated by the second receive end.

The authorization module 905 is configured to authorize the first receive end and the second receive end according to an authorization control strategy of the second audio/video stream.

The modules of the transmit end may be further configured to perform other actions in the foregoing method embodiments. All related content of the steps in the foregoing method embodiment may be cited in function descriptions of the corresponding functional modules. Details are not described herein again.

When an integrated unit is used, FIG. 10 is a diagram of another possible structure of the transmit end in the foregoing embodiments. As shown in FIG. 10, the transmit end provided in this embodiment of this application may include a processing module 1001 and a communication module 1002. The processing module 1001 may be configured to control and manage an action of the transmit end. For example, the processing module 1001 may be configured to support execution of the steps performed by the key management module 901, the encryption module 902, the authentication module 904, and the authorization module 905, and/or another process of the technology described in this specification. The communication module 1002 may be configured to support communication between the transmit end and another network entity, for example, support communication between the transmit end and a receive end. For example, the communication module 1002 may be configured to support the transmit end in performing the steps performed by the sending module 903.

Optionally, as shown in FIG. 10, the transmit end may further include a storage module 1003, configured to store computer instructions and data.

The processing module 1001 may be a processor or a controller. Alternatively, the processor may be a combination that implements a computing function, for example, a combination of one or more microprocessors, or a combination of a DSP and a microprocessor. The communication module 1002 may be a communication interface. The storage module 1003 may be a memory. When the processing module 1001 is the processor, the communication module 1002 is the communication interface, and the storage module 1003 is the memory, the processor, a transceiver, and the memory may be connected through a bus.

For more details about implementing the foregoing functions by the modules included in the transmit end, refer to the descriptions in the foregoing method embodiment. Details are not described herein again. Embodiments in this specification are all described in a progressive manner, for same or similar parts in embodiments, refer to these embodiments, and each embodiment focuses on a difference from other embodiments.

Correspondingly, an embodiment of this application provides a receive end. In this embodiment of this application, the receive end may be divided into functional modules based on the foregoing method example, for example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

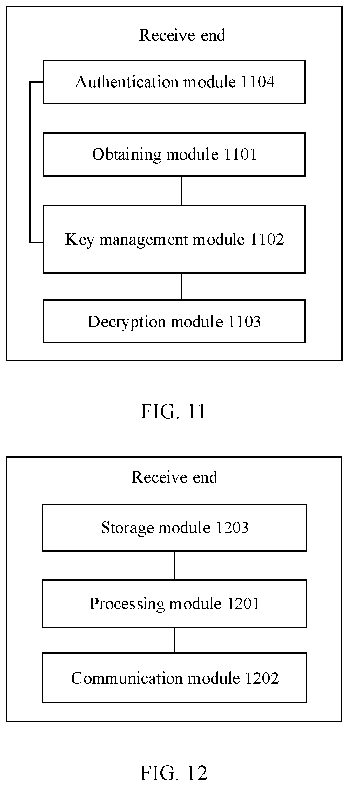

When each functional module is obtained through division based on each corresponding function, FIG. 11 is a diagram of a possible structure of a receive end in the foregoing embodiment. As shown in FIG. 11, the receive end includes an obtaining module 1101, a key management module 1102, and a decryption module 1103.

In a unicast scenario, the obtaining module 1101 is configured to parse a first encrypted audio/video stream to obtain a first encrypted audio/video packet and a first encryption description packet, where the first encryption description packet includes an encryption algorithm and mode, and/or first counter information, and the first counter information is high 64 bits of a first counter, for example, perform S405 in the foregoing method embodiment. The key management module 1102 is configured to generate a first content key based on the first encryption description packet, where the first content key is used to encrypt an audio/video stream in the unicast scenario, for example, perform S406 in the foregoing method embodiment. The decryption module is configured to decrypt the first encrypted audio/video packet based on the encryption algorithm and mode by using the first content key and the first counter to obtain a first audio/video packet, where the first audio/video packet is a packet of a first audio/video stream, for example, perform S407 in the foregoing method embodiment.

Optionally, the first encryption description packet further includes an identifier of the first content key and/or an identifier of a transmit end. The key management module 1102 is specifically configured to derive the first content key based on a shared master key between the transmit end and the receive end, the identifier of the first content key, a random number generated by the transmit end, a random number generated by the receive end, the identifier of the transmit end, and an identifier of the receive end.

Optionally, the receive end provided in this embodiment of this application further includes an authentication module 1104. The authentication module 1104 is configured to perform an authentication and key agreement procedure with the transmit end to obtain the shared master key and the random number generated by the transmit end. Specifically, the authentication module 1104 performs authentication and key agreement with the first receive end to obtain the first shared master key, and the authentication module 1104 performs authentication and key agreement with a second receive end to obtain a second shared master key.

Optionally, the obtaining module 1101 is further configured to parse a second encrypted audio/video stream to obtain a second encrypted audio/video packet, a second encryption description packet, and a first key distribution packet, where the second encryption description packet includes the encryption algorithm and mode, and/or second counter information, the second counter information is high 64 bits of a second counter, the first key distribution packet includes a third counter and/or a first encrypted content key, and the first encrypted content key is a key obtained by encrypting a second content key based on the encryption algorithm and mode by using a first target key and the third counter, for example, perform S814 in the foregoing method embodiment. The key management module 1102 of the receive end is further configured to decrypt the first encrypted content key based on the encryption algorithm and mode by using the first target key and the third counter in the first key distribution packet to obtain the second content key, where the second content key is used to encrypt an audio/video stream in a multicast scenario, for example, perform S815 in the foregoing method embodiment. The decryption module 1103 is further configured to decrypt the second encrypted audio/video packet based on the encryption algorithm and mode by using the second content key and the second counter to obtain a second audio/video packet, where the second audio/video packet is a packet of the first audio/video stream, for example, perform S816 in the foregoing method embodiment.

In a multicast scenario, the obtaining module 1101 is configured to parse a second encrypted audio/video stream to obtain a second encrypted audio/video packet, an encryption description packet, and a key distribution packet, where the encryption description packet includes an encryption algorithm and mode, and/or second counter information, the second counter information is high 64 bits of a second counter, the first key distribution packet includes a third counter and/or a first encrypted content key, and the first encrypted content key is a key obtained by encrypting a second content key based on the encryption algorithm and mode by using a first target key and the third counter, for example, perform S606 in the foregoing method embodiment. The key management module 1102 is configured to decrypt the first encrypted content key based on the encryption algorithm and mode by using the first target key and the third counter in the first key distribution packet to obtain the second content key, where the second content key is used to encrypt an audio/video stream in the multicast scenario, for example, perform S607 in the foregoing method embodiment. The decryption module 1103 is configured to decrypt the second encrypted audio/video packet based on the encryption algorithm and mode by using the second content key and the second counter to obtain a second audio/video packet, for example, perform S608 in the foregoing method embodiment.

Optionally, the authentication module 1104 is configured to perform an authentication and key agreement procedure with a transmit end, to obtain a shared master key between the transmit end and the receive end and a random number generated by the transmit end.

The modules of the receive end may be further configured to perform other actions in the foregoing method embodiments. All related content of the steps in the foregoing method embodiment may be cited in function descriptions of the corresponding functional modules. Details are not described herein again.

When an integrated unit is used, FIG. 12 is a diagram of another possible structure of a receive end in the foregoing embodiments. As shown in FIG. 12, the receive end provided in this embodiment of this application may include a processing module 1201 and a communication module 1202. The processing module 1201 may be configured to control and manage an action of the receive end. For example, the processing module 1201 may be configured to support execution of the steps performed by the key management module 1102, the decryption module 1103, and the authentication module 1104, and/or another process of the technology described in this specification. The communication module 1202 may be configured to support communication between the receive end and another network entity, for example, support communication between the receive end and the receive end. For example, the communication module 1202 may be configured to support the receive end in obtaining an encrypted audio/video stream from the transmit end.

Optionally, as shown in FIG. 12, the receive end may further include a storage module 1203, configured to store computer instructions and data.

The processing module 1201 may be a processor or a controller. Alternatively, the processor may be a combination that implements a computing function, for example, a combination of one or more microprocessors, or a combination of a DSP and a microprocessor. The communication module 1202 may be a communication interface. The storage module 1203 may be a memory. When the processing module 1201 is the processor, the communication module 1202 is the communication interface, and the storage module 1203 is the memory, the processor, a transceiver, and the memory may be connected through a bus.

For more details about implementing the foregoing functions by the modules included in the receive end, refer to the descriptions in the foregoing method embodiment. Details are not described herein again. Embodiments in this specification are all described in a progressive manner, for same or similar parts in embodiments, refer to these embodiments, and each embodiment focuses on a difference from other embodiments.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a magnetic disk, or a magnetic tape), an optical medium (for example, a digital video disc (digital video disc, DVD)), a semiconductor medium (for example, a solid state drive (solid state drive, SSD)), or the like.

The foregoing descriptions about implementations allow a person skilled in the art to understand that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the division into the modules or units is merely logical function division and may be other division in actual implementation. For example, a plurality of units or assemblies may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An audio/video stream transmission method, applied to a transmit end, wherein the method comprises:

   generating a first content key, wherein the first content key is used to encrypt an audio/video stream in a unicast scenario;
   generating a first encryption description packet, wherein the first encryption description packet comprises an encryption algorithm and mode, and/or first counter information, and the first counter information is high 64 bits of a first counter;
   encrypting a first audio/video packet based on the encryption algorithm and mode by using the first content key and the first counter to obtain a first encrypted audio/video packet, wherein the first audio/video packet is a packet of a first audio/video stream; and
   sending a first encrypted audio/video stream comprising the first encrypted audio/video packet and the first encryption description packet to a first receive end.

2. The method according to claim 1, wherein the first encryption description packet further comprises an identifier of the first content key and/or an identifier of the transmit end; and the generating a first content key comprises:
   deriving the first content key based on a shared master key between the transmit end and the first receive end, the identifier of the first content key, a random number generated by the transmit end, a random number generated by the first receive end, the identifier of the transmit end, and an identifier of the first receive end.

3. The method according to claim 1 or 2, wherein the sending a first encrypted audio/video stream comprising the first encrypted audio/video packet and the first encryption description packet to a first receive end comprises:
   carrying the first encryption description packet in a vertical blanking region of the first encrypted audio/video packet to obtain the first encrypted audio/video stream, and sending the first encrypted audio/video stream to the first receive end.

4. The method according to any one of claims 1 to 3, wherein before the generating a first content key, the method further comprises:
   initiating an authentication and key agreement procedure to the first receive end to obtain the shared master key and the random number generated by the first receive end.

5. The method according to any one of claims 1 to 4, wherein before the encrypting a first audio/video packet based on the encryption algorithm and mode by using the first content key and the first counter to obtain a first encrypted audio/video packet, the method further comprises:
   authorizing the first receive end according to an authorization control strategy of the first audio/video stream.

6. The method according to any one of claims 1 to 5, wherein the method further comprises:

   randomly generating a second content key, wherein the second content key is used to encrypt an audio/video stream in a multicast scenario;
   generating a second encryption description packet, wherein the second encryption description packet comprises the encryption algorithm and mode, and/or second counter information, and the second counter information is high 64 bits of a second counter;
   encrypting a second audio/video packet based on the encryption algorithm and mode by using the second content key and the second counter to obtain a second encrypted audio/video packet, wherein the second audio/video packet is a packet of the first audio/video stream;

generating a first key distribution packet and a second key distribution packet, wherein the first key distribution packet comprises a third counter and/or a first encrypted content key, and the first encrypted content key is a key obtained by encrypting the second content key based on the encryption algorithm and mode by using a first target key and the third counter; and the second key distribution packet comprises a fourth counter and/or a second encrypted content key, and the second encrypted content key is a key obtained by encrypting the second content key based on the encryption algorithm and mode by using a second target key and the fourth counter; and separately sending a second encrypted audio/video stream comprising the second encrypted audio/video packet, the second encryption description packet, the first key distribution packet, and the second key distribution packet to the first receive end and the second receive end.

7. The method according to claim 6, wherein

the first target key is generated based on the shared master key between the transmit end and the first receive end, the random number generated by the transmit end, the random number generated by the first receive end, the identifier of the transmit end, and the identifier of the first receive end; and the second target key is generated based on a shared master key between the transmit end and the second receive end, the random number generated by the transmit end, a random number generated by the second receive end, the identifier of the transmit end, and an identifier of the second receive end.

8. An audio/video stream transmission method, applied to a receive end, wherein the method comprises:

parsing a first encrypted audio/video stream to obtain a first encrypted audio/video packet and a first encryption description packet, wherein the first encryption description packet comprises an encryption algorithm and mode, and/or first counter information, and the first counter information is high 64 bits of a first counter; generating a first content key based on the first encryption description packet, wherein the first content key is used to encrypt an audio/video stream in a unicast scenario; and decrypting the first encrypted audio/video packet based on the encryption algorithm and mode by using the first content key and the first counter to obtain a first audio/video packet, wherein the first audio/video packet is a packet of a first audio/video stream.

9. The method according to claim 8, wherein the first encryption description packet further comprises an identifier of the first content key and/or an identifier of a transmit end; and the generating a first content key based on the first encryption description packet comprises: deriving the first content key based on a shared master key between the transmit end and the receive end, the identifier of the first content key, a random number generated by the transmit end, a random number generated by the receive end, the identifier of the transmit end, and an identifier of the receive end.

10. The method according to claim 8 or 9, wherein the method further comprises: performing an authentication and key agreement procedure with the transmit end to obtain the shared master key and the random number generated by the transmit end.

11. The method according to any one of claims 8 to 10, wherein the method further comprises:

parsing a second encrypted audio/video stream to obtain a second encrypted audio/video packet, a second encryption description packet, and a first key distribution packet, wherein the second encryption description packet comprises the encryption algorithm and mode, and/or second counter information, the second counter information is high 64 bits of a second counter, the first key distribution packet comprises a third counter and/or a first encrypted content key, and the first encrypted content key is a key obtained by encrypting the second content key based on the encryption algorithm by using a first target key and the third counter; decrypting the first encrypted content key based on the encryption algorithm and mode by using the first target key and the third counter in the key distribution packet to obtain the second content key, wherein the second content key is used to encrypt an audio/video stream in a multicast scenario; and decrypting the second encrypted audio/video packet based on the encryption algorithm and mode by using the second content key and the second counter to obtain a second audio/video packet, wherein the second audio/video packet is a packet of the first audio/video stream.

12. The method according to claim 11, wherein the first target key is generated based on the shared master key, the random number generated by the transmit end, the random number generated by the receive end, the identifier of the transmit end, and the identifier of the receive end.

13. An audio/video stream transmission method, applied to a transmit end, wherein the method comprises:

randomly generating a second content key, wherein the second content key is used to encrypt an audio/video stream in a multicast scenario;
generating an encryption description packet, wherein the encryption description packet comprises an encryption algorithm and mode, and/or second counter information, and the second counter information is high 64 bits of a second counter;
encrypting a second audio/video packet based on the encryption algorithm and mode by using the second content key and the second counter to obtain a second encrypted audio/video packet, wherein the second audio/video packet is a packet of a second audio/video stream;
generating a first key distribution packet and a second key distribution packet, wherein the first key distribution packet comprises a third counter and/or a first encrypted content key, and the first encrypted content key is a key obtained by encrypting the second content key based on the encryption algorithm and mode by using a first target key and the third counter; and the second key distribution packet comprises a fourth counter and/or a second encrypted content key, and the second encrypted content key is a key obtained by encrypting the second content key based on the encryption algorithm and mode by using a second target key and the fourth counter; and
separately sending a second encrypted audio/video stream comprising the second encrypted audio/video packet, the encryption description packet, the first key distribution packet, and the second key distribution packet to a first receive end and a second receive end.

14. The method according to claim 13, wherein the separately sending a second encrypted audio/video stream comprising the second encrypted audio/video packet, the encryption description packet, the first key distribution packet, and the second key distribution packet to a first receive end and a second transmit end comprises:
carrying the encryption description packet, the first key distribution packet, and the second key distribution packet in a vertical blanking region of the second encrypted audio/video packet to obtain the second encrypted audio/video stream, and sending the second encrypted audio/video stream to the first receive end and the second receive end.

15. The method according to claim 13 or 14, wherein before the randomly generating a second content key, the method further comprises:

initiating an authentication and key agreement procedure to the first receive end to obtain a first shared master key and a random number generated by the first receive end; and
initiating an authentication and key agreement procedure to the second receive end to obtain a second shared master key and a random number generated by the second receive end.

16. The method according to any one of claims 13 to 15, wherein the method further comprises:
authorizing the first receive end and the second receive end according to an authorization control strategy of the second audio/video stream.

17. The method according to claim 15 or 16, wherein

the first target key is generated based on the first shared master key, a random number generated by the transmit end, the random number generated by the first receive end, an identifier of the transmit end, and an identifier of the first receive end; and
the second target key is generated based on the second shared master key, the random number generated by the transmit end, the random number generated by the second receive end, the identifier of the transmit end, and an identifier of the second receive end.

18. An audio/video stream transmission method, applied to a receive end, wherein the method comprises:

parsing a second encrypted audio/video stream to obtain a second encrypted audio/video packet, an encryption description packet, and a first key distribution packet, wherein the encryption description packet comprises an encryption algorithm and mode, and/or second counter information, the second counter information is high 64 bits of a second counter, the first key distribution packet comprises a third counter and/or a first encrypted content key, and the first encrypted content key is a key obtained by encrypting the second content key based on the encryption algorithm by using a first target key and the third counter;

decrypting the first encrypted content key based on the encryption algorithm and mode by using the first target key and the third counter in the first key distribution packet to obtain the second content key, wherein the second content key is used to encrypt an audio/video stream in a multicast scenario; and

decrypting the second encrypted audio/video packet based on the encryption algorithm and mode by using the second content key and the second counter to obtain a second audio/video packet, wherein the second audio/video packet is a packet of the second audio/video stream.

19. The method according to claim 18, wherein the method further comprises:

performing an authentication and key agreement procedure with the transmit end to obtain a shared master key between the transmit end and the receive end and a random number generated by the transmit end.

20. The method according to claim 18 or 19, wherein

the first target key is generated based on the shared master key between the transmit end and the receive end, the random number generated by the transmit end, a random number generated by the receive end, an identifier of the transmit end, and an identifier of the receive end.

21. A transmit end, comprising a memory and at least one processor connected to the memory, wherein the memory is configured to store computer program code, the computer program code comprises computer instructions, and when the computer instructions are executed by the at least one processor, the computing device performs the method according to any one of claims 1 to 7 or the method according to any one of claims 13 to 17.

22. A computer-readable storage medium, storing computer instructions, wherein when the computer instructions are run on a computer, the method according to any one of claims 1 to 7 or the method according to any one of claims 13 to 17 is performed.

23. A receive end, comprising a memory and at least one processor connected to the memory, wherein the memory is configured to store computer program code, the computer program code comprises computer instructions, and when the computer instructions are executed by the at least one processor, the computing device performs the method according to any one of claims 8 to 12 or the method according to any one of claims 18 to 20.

24. A computer-readable storage medium, storing computer instructions, wherein when the computer instructions are run on a computer, the method according to any one of claims 8 to 12 or the method according to any one of claims 18 to 20 is performed.

25. An audio/video stream transmission system, comprising the transmit end according to claim 21 and one or more receive ends according to claim 23.

FIG. 1

FIG. 2

```
┌──────────────┐                                    ┌──────────────┐
│ Transmit end │                                    │  Receive end │
└──────┬───────┘                                    └──────┬───────┘
       │                                                   │
┌──────┴──────────────────────────────────────┐           │
│ S301: The transmit end generates a first     │           │
│ random number, and generates a first private │           │
│ key and a first public key                   │           │
└──────┬───────────────────────────────────────┘          │
       │ S302: The transmit end sends an                   │
       │ authentication exchange message (the first        │
       │ random number and the first public key)           │
       │ to the receive end                                │
       │──────────────────────────────────────────────────▶│
       │         ┌─────────────────────────────────────────┴──┐
       │         │ S303: Generate a second random number, and  │
       │         │ generate a second private key, a second     │
       │         │ public key, and a shared master key         │
       │         └─────────────────────────────────────────┬──┘
       │         ┌─────────────────────────────────────────┴──┐
       │         │ S304: The receive end generates a signature │
       │         │ and an authentication code                  │
       │         └─────────────────────────────────────────┬──┘
       │ S305: The receive end sends an authentication     │
       │ response message (the second random number, a     │
       │ level-2 certificate, a certificate of the receive │
       │ end, the second public key, the signature, and    │
       │ the authentication code) to the transmit end      │
       │◀──────────────────────────────────────────────────│
┌──────┴───────────────────────────────────────┐          │
│ S306: After receiving the authentication      │          │
│ response message, the transmit end performs   │          │
│ certificate verification on the receive end,  │          │
│ and verifies the signature and the            │          │
│ authentication code                           │          │
└──────┬────────────────────────────────────────┘         │
       │ S307: The transmit end sends an authentication    │
       │ confirmation message (a confirmation code) to the │
       │ receive end                                       │
       │──────────────────────────────────────────────────▶│
       │         ┌─────────────────────────────────────────┴──┐
       │         │ S308: Verify the confirmation code          │
       │         └─────────────────────────────────────────┬──┘
       │                                                   │
```

FIG. 3

| Transmit end | First receive end |

S401: The transmit end generates a first content key

S402: The transmit end generates a first encryption description packet, where the first encryption description packet includes an encryption algorithm and mode, and/or first counter information

S403: The transmit end encrypts a first audio/video packet from a first audio/video stream based on the encryption algorithm and mode by using the first content key and a first counter to obtain a first encrypted audio/video packet

S404: The transmit end sends a first encrypted audio/ video stream including the first encrypted audio/ video packet and the first encryption description packet to the first receive end

S405: The first receive end parses the first encrypted audio/video stream to obtain the first encrypted audio/video packet and the first encryption description packet

S406: The first receive end generates the first content key based on the first encryption description packet

S407: The first receive end decrypts the first encrypted audio/ video packet based on the encryption algorithm and mode by using the first content key and the first counter to obtain the first audio/video packet

FIG. 4

FIG. 5A

EP 4 576 787 A1

CONT.
FROM
FIG. 5A

First receive end

Management
control adapter

Authentication
module

Key management module

Uplink
port

Receive adapter

Decryption
module

Audio/Video output
module

Second receive end

Management
control adapter

Authentication
module

Key management module

Uplink
port

Receive adapter

Decryption
module

Audio/Video output
module

FIG. 5B

| Transmit end | First receive end | Second receive end |

S601: The transmit end randomly generates a second content key

S602: The transmit end generates an encryption description packet, where the encryption description packet includes an encryption algorithm and mode, and/or second counter information

S603: The transmit end encrypts a second audio/video packet based on the encryption algorithm and mode by using the second content key and a second counter to obtain a second encrypted audio/video packet

S604: The transmit end generates a first key distribution packet and a second key distribution packet, where the first key distribution packet includes a third counter and/or a first encrypted content key, and the second key distribution packet includes a fourth counter and/or a second encrypted content key

S605: The transmit end sends a second encrypted audio/video stream including the second encrypted audio/video packet, the encryption description packet, the first key distribution packet, and the second key distribution packet to the first receive end and the second receive end

TO FIG. 6B          TO FIG. 6B          TO FIG. 6B

FIG. 6A

CONT.
FROM
FIG. 6A

CONT.
FROM
FIG. 6A

CONT.
FROM
FIG. 6A

S606: The first receive end parses the second encrypted audio/video stream to obtain the second encrypted audio/video packet, the encryption description packet, and the first key distribution packet

S609: The second receive end parses the second encrypted audio/video stream to obtain the second encrypted audio/video packet, the encryption description packet, and the second key distribution packet

S607: The first receive end decrypts the first encrypted content key based on the encryption algorithm and mode by using a first target key and the third counter in the first key distribution packet to obtain the second content key

S610: The second receive end decrypts the second encrypted content key based on the encryption algorithm and mode by using a second target key and the fourth counter in the second key distribution packet to obtain the second content key

S608: The first receive end decrypts the second encrypted audio/video packet based on the encryption algorithm and mode by using the second content key and the second counter to obtain the second audio/video packet

S611: The second receive end decrypts the second encrypted audio/video packet based on the encryption algorithm and mode by using the second content key and the second counter to obtain the second audio/video packet

FIG. 6B

FIG. 7

| Transmit end | First receive end | Second receive end |
|---|---|---|

S801: The transmit end generates a first content key

S802: The transmit end generates a first encryption description packet, where the first encryption description packet includes an encryption algorithm and mode, and/or first counter information

S803: The transmit end encrypts a first audio/video packet from a first audio/video stream based on the encryption algorithm and mode by using the first content key and a first counter to obtain a first encrypted audio/video packet

S804: The transmit end sends the first encrypted audio/video packet and the first encryption description packet to the first receive end

S805: The first receive end obtains the first encrypted audio/video packet and the first encryption description packet

S806: The first receive end generates the first content key based on the first encryption description packet

S807: The first receive end decrypts the first encrypted audio/video packet based on the encryption algorithm and mode by using the first content key and the first counter to obtain the first audio/video packet

S809: The transmit end randomly generates a second content key

S810: The transmit end generates a second encryption description packet, where the first encryption description packet includes the encryption algorithm and mode, and/or second counter information

S811: The transmit end encrypts a second audio/video packet from the first audio/video stream based on an encryption algorithm by using the second content key and a second counter to obtain a second encrypted audio/video packet

TO
FIG. 8B

TO
FIG. 8B

TO
FIG. 8B

FIG. 8A

CONT. FROM
FIG. 8A

CONT. FROM
FIG. 8A

CONT. FROM
FIG. 8A

S812: The transmit end generates a first key distribution packet and a second key distribution packet, where the first key distribution packet includes a third counter and/or a first encrypted content key, and the second key distribution packet includes a fourth counter and/or a second encrypted content key

S813: The transmit end separately sends a second encrypted audio/video stream including the second encrypted audio/video packet, the second encryption description packet, the key distribution packet, and the second key distribution packet to the first receive end and the second receive end

S814: The first receive end parses the second encrypted audio/video stream to obtain the second encrypted audio/video packet, the second encryption description packet, and the first key distribution packet

S817: The second receive end parses the second encrypted audio/video stream to obtain the second encrypted audio/video packet, the second encryption description packet, and the second key distribution packet

S815: The first receive end decrypts the first encrypted content key based on the encryption algorithm and mode by using a first target key and the third counter in the first key distribution packet to obtain the second content key

S818: The second receive end decrypts the second encrypted content key based on the encryption algorithm and mode by using a second target key and the fourth counter in the second key distribution packet to obtain the second content key

S816: The first receive end decrypts the second encrypted audio/video packet based on the encryption algorithm and mode by using the second content key and the second counter to obtain the second audio/video packet

S819: The second receive end decrypts the second encrypted audio/video packet based on the encryption algorithm and mode by using the second content key and the second counter to obtain the second audio/video packet

FIG. 8B

Transmit end

Authorization module 905

Authentication module 904

Key management module 901

Encryption module 902

Sending module 903

FIG. 9

Transmit end

Storage module 1003

Processing module 1001

Communication module 1002

FIG. 10

Receive end

Authentication module 1104

Obtaining module 1101

Key management module 1102

Decryption module 1103

FIG. 11

Receive end

Storage module 1203

Processing module 1201

Communication module 1202

FIG. 12

## INTERNATIONAL SEARCH REPORT

| International application No. |
|---|
| **PCT/CN2023/084909** |

### A.    CLASSIFICATION OF SUBJECT MATTER

H04N21/2347(2011.01)i

According to International Patent Classification (IPC) or to both national classification and IPC

### B.    FIELDS SEARCHED

Minimum documentation searched (classification system followed by classification symbols)

IPC:H04N,H04L

Documentation searched other than minimum documentation to the extent that such documents are included in the fields searched

Electronic data base consulted during the international search (name of data base and, where practicable, search terms used)

CNTXT, ENTXTC, ENTXT, DWPI, CJFD, CNKI: 内容保护, 单播, 组播, 加密, 密钥, 秘钥, 视音频, 视音频, 媒体流, 多媒体, 计数器, content protect, HDCP, unicast, multicast, encryption, key, audio-video, media, counter

### C.    DOCUMENTS CONSIDERED TO BE RELEVANT

| Category* | Citation of document, with indication, where appropriate, of the relevant passages | Relevant to claim No. |
|---|---|---|
| Y | WO 2022056747 A1 (HUAWEI TECHNOLOGIES CO., LTD.) 24 March 2022 (2022-03-24) description, page 13, line 5-page 40, line 35, and figures 1-13 | 1, 2, 4, 5, 8-10, 21-25 |
| Y | CN 112202826 A (VISIONVERA INFORMATION TECHNOLOGY CO., LTD.) 08 January 2021 (2021-01-08) description, paragraphs 0004-0016 | 1, 2, 4, 5, 8-10, 21-25 |
| A | CN 112511299 A (SHENZHEN NATIONAL ENGINEERING LABORATORY OF DIGITAL TELEVISION CO., LTD.) 16 March 2021 (2021-03-16) entire document | 1-25 |
| A | US 2016021401 A1 (CRESTRON ELECTRONICS INC.) 21 January 2016 (2016-01-21) entire document | 1-25 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **31 July 2023** | **01 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/084909**

| Patent document cited in search report | | | Publication date (day/month/year) | Patent family member(s) | | | Publication date (day/month/year) |
|---|---|---|---|---|---|---|---|
| WO | 2022056747 | A1 | 24 March 2022 | EP | 4207774 | A1 | 05 July 2023 |
| CN | 112202826 | A | 08 January 2021 | | None | | |
| CN | 112511299 | A | 16 March 2021 | | None | | |
| US | 2016021401 | A1 | 21 January 2016 | US | 2016021430 | A1 | 21 January 2016 |
| | | | | US | 9628868 | B2 | 18 April 2017 |
| | | | | US | 2016021402 | A1 | 21 January 2016 |
| | | | | US | 9948994 | B2 | 17 April 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022131787 W